# EUROPÄISCHE PATENTSCHRIFT

(11) **EP 1 349 662 B1**
(45) Veröffentlichungstag und Bekanntmachung des Hinweises auf die Patenterteilung: **23.09.2009**
(21) Anmeldenummer: 01991877.0
(22) Anmeldetag: 21.12.2001
(51) Int. Cl.: B01L 3/02, G01N 35/10, G01N 35/02

(54) **VERFAHREN ZUR VERMEIDUNG VON KONTAMINATIONEN VON NEGATIVEM PROBENMATERIAL DURCH ANALYTHALTIGE PROBEN BEI DER VERWENDUNG VON PIPETTIERAUTOMATEN**
METHOD FOR AVOIDING THE CONTAMINATION OF NEGATIVE SAMPLING MATERIAL BY SAMPLES CONTAINING ANALYTES DURING THE USE OF AUTOMATIC PIPETTE MACHINES
PROCEDE POUR EVITER LA CONTAMINATION DE MATERIEL D'ECHANTILLONNAGE NEGATIF PAR DES ECHANTILLONS CONTENANT DES ANALYTES, PAR UTILISATION DE MACHINES AUTOMATIQUES DE PIPPETAGE

(30) Priorität: 21.12.2000 DE 10064428
(43) Veröffentlichungstag der Anmeldung: 08.10.2003
(73) Patentinhaber: Siemens Healthcare Diagnostics Products GmbH, 35041 Marburg (DE)
(72) Erfinder: KRUPKA, Udo, 35043 Marburg (DE); SCHMANDT, Wolfgang, 35415 Pohlheim (DE)
(86) Internationale Anmeldenummer: PCT/EP2001/015197
(87) Internationale Veröffentlichungsnummer: WO 2002/049764

(56) Entgegenhaltungen:
- EP-A- 0 733 905
- WO-A-00/05580
- WO-A-99/25476
- US-A- 5 538 849

## Beschreibung

Die Erfindung betrifft Verfahren zur Reduzierung der Kontamination von leeren oder bereits mit analytfreiem oder in geringer Konzentration analythaltigem Probenmaterial bestückten Reaktionsgefäßen innerhalb einer Anordnung in räumlicher Nähe zueinander befindlicher Reaktionsgefäße während der Pipettierung von Proben oder Reagenzien mit einem automatischen Probenverteiler sowie hardwareseitige Maßnahmen zur Reduzierung oder Verhinderung von Kontaminationen

Abgeleitet wurde die Erfindung mit dem BEP^{®} 2000 , Firma Dade Behring, mit dem auch die Beispiele erarbeitet wurden, ohne allerdings die Gegenstände vorliegender Erfindung auf dieses System zu beschränken.

Die automatische Pipettierung von Proben durch sogenannte Pipettierautomaten (auch Probenverteiler genannt) findet breiten Einsatz in human-serologischen Labors und Veterinäruntersuchungsanstalten und wird für diagnostische Untersuchungen und neuerdings auch bei mikrobiologischen/gentechnologischen Fragestellungen eingesetzt.

Dafür werden kommerzielle, speziell für Probenpipettierungszwecke entwickelte Geräte verwendet - *stand-alone-instruments -* wie beispielsweise der Mikrolab AT Plus^{®}, Firma Hamilton, und die Abarbeitung von Tests erfolgt getrennt manuell oder mit eigens dafür konzipierten Prozessoren, wie beispielsweise mit dem BEP III^{®}, Firma Dade Behring.

Alternativ ist die Probenverteilung integraler Bestandteil oder ein Modul eines Vollautomaten, der auch das sich anschließende eigentliche Testverfahren des zu bestimmenden Analyten automatisiert vornimmt.

Beispiele für diese sogenannten *front-end-instruments* sind:
- BN 100^{®}, Firma Dade Behring Marburg GmbH für immunchemische Plasmaproteinbestimmungen aus Human-Probenmaterial;
- ETI Lab^{®}, Firma DiaSorin und BEP^{®} 2000, Firma Dade Behring zum Nachweis von Analyten im Bereich der Infektionsserologie auf Basis von Enzyme Linked Immuno Sorbent Assays (ELISAs).

Während sich die Untersuchungsmethoden und die diagnostischen Anwendungen der beiden genannten Produkte erheblich unterscheiden, ist die zu Grunde liegende Logik beider Instrumentationen identisch. Der jeweilige Vollautomat verteilt die Proben unverdünnt oder nach einer Vorverdünnung in Reaktionsgefäße, in denen durch Zusatz von immunologisch reaktiven Komponenten das eigentliche Bestimmungsverfahren ebenfalls automatisch durchgeführt wird.

Allgemein können als Reaktionsgefäße Röhrchen, Mikrotitrationsplatten, Küvetten o.ä. dienen.

Nach Messung des Testergebnisses (photometrisch, turbidimetrisch o.ä.) wird unter Anlegung von Kriterien zur Validierung des gesamten Testlaufes jede einzelne Probe von programmierten Rechenprogrammen der jeweiligen Software in Bezug auf den untersuchten Analyten als positiv, negativ oder wenn in der Testdefinition vorgesehen, als grenzwertig klassifiziert.

Analyten können sein: spezifische Plasmaproteine (beispielsweise Tumormarker), Fertilitäts- oder Schilddrüsen-Marker (beispielsweise FSH oder Ca 15-9), Antikörper (beispielsweise Rubella-spezifische Immunglobuline der G-Klasse), Antigene (beispielsweise Hepatitis B surface Antigen / HBsAg) und andere dem Fachmann bekannte Parameter.

Für gewisse Parameter ist es als Therapie-Indikation oder-Kontrolle diagnostisch wichtig, auch die Konzentration quantitativ oder semiquantitativ zu ermitteln, was in der Regel auch softwareunterstützt erfolgt. Häufig wird die Zuordnung des patientenorientierten Ergebnisausdruckes (Computer des Analysengerätes, Hardcopy und/oder Zentralrechner) über eine Barcode-Erfassung des Primärröhrchens der entsprechenden Probe vorgenommen.

Kommt es bei dem Pipettiervorgang tatsächlich zu Kontaminationen von leeren oder von mit analytfreiem Probenmaterial bereits bestückten Reaktionsgefäßen mit analythaltigem Material, können solche Spuren bei tatsächlich analytfreien Proben fälschlicherweise eine Reaktivität vortäuschen. Ebenfalls kann es bei Proben mit niedrigen Analytkonzentrationen durch Kontaminationen zu einer Vortäuschung zu hoher Parameterspiegel kommen.

Die möglichen Konsequenzen einer derartigen falsch-positiven Reaktion sind vielfältig und bekannt, wobei sich derartige Effekte besonders gravierend im Bereich der Infektionsserologie auswirken können:
- es könnte ein immunologischer Schutz vorgetäuscht werden, der gar nicht vorliegt; ein falsch-positives Resultat bei der Bestimmung von Antikörpern gegen Hepatitis A-Virusantigen (Anti-HAV) oder Hepatitis B-Virusantigen (Anti-HBs) könnte zum Unterlassen einer richtigerweise vorzunehmenden Impfung führen;
- beim Screening von Parametern im Blutspendewesen würde eine hohe Quote von falsch-positiven Ergebnissen die Freigabe dieser Konserven erheblich verzögern, da nachgetestet werden müßte; obwohl in der Regel kein Schaden für Konservenempfänger anzunehmen ist, resultiert ein nennenswerter Mehraufwand an Zeit und Kosten, abgesehen von möglichen psychologischen Irritationen der entsprechenden Spender, wenn diese im Fall eines falsch-positiven AIDS-Befundes (Anti-HIV) zur Abklärung neu einbestellt werden müßten;
- für quantitative Bestimmungen beispielsweise von Tumormarkern mit dem BN 100^{®} oder Anti-Rubellavirus-Antikörpern mit dem ETILab^{®} wären falsche Rückschlüsse vorstellbar auf die angewendete Therapie (Tumormarker-Verlauf bei Patienten unter Therapie) oder einzuleitende Maßnahmen (falsch positiver Anstieg von Rubella-spezifischen Antikörpern im Rahmen der Schwangerschaftskontrolle).

Sowohl die Effekte von Kontaminationen als auch mögliche Konsequenzen sind unter verschiedenen Begriffen bekannt und wurden mit den verschiedensten dem Fachmann bekannten Maßnahmen begegnet, um die Labordiagnostik sicherer zu gestalten und nicht zuletzt um Zeit und Kosten für den Anwender einzusparen:

Unter Verschleppung oder carry-over beispielsweise werden allgemein an der Innenoberfläche von Pipettierspitzen oder Nadeln haftende Analytreste verstanden; bei Verwendung von beispielsweise Nadelspitzen für den Dauergebrauch des Probenpipettiervorgangs können kleinste Reste von analythaltiger Probe in einem oder sogar mehreren der darauffolgenden Pipettiervorgänge von Proben verschleppt werden, die diesen Analyten nicht bzw. in kleiner Konzentration aufweisen. Die Konsequenz eines derartigen Effektes ist daran erkennbar, daß in einem oder sogar mehreren der Reaktionsgefäße, die sich beim Pipettieren zeitlich, meistens auch örtlich nach der Position der analythaltigen Probe befanden, falsch-positive Reaktivitäten gemessen werden. Bei mehreren nacheinander betroffenen Reaktionsgefäßen nimmt die Ausprägung typischerweise von einem Reaktionsgefäß zum nächsten systematisch ab.

Bisher gilt eine wirkungsvolle Gegenmaßnahme dann als realisiert, wenn eine Verschleppung von 1 millionstel Teil (Endverdünnung der analythaltigen Probe 1:10⁶ in analytfreier Probe) experimentell nicht mehr störend im angewendeten Testverfahren in der ersten der analythaltigen Probe folgenden Position nachgewiesen werden kann.

Erreichbar ist dies derzeit durch Verwendung von geeigneten Waschpufferlösungen, mit denen beispielsweise die Pipettiernadeln (häufig Edelstahlnadeln) nach jedem Pipettiervorgang gespült werden, um ggf. an der Innenoberfläche der Nadeln haftende Analyten zu entfernen bevor die nächste Probe pipettiert wird (Beispiel: Genesis RSP^{®}, Firma Tecan).

Alternativ kommen Einwegspitzen zur Anwendung, wobei die auch Wechselspitzen genannten Teile nach jedem Pipettiervorgang einer Probe verworfen werden (Beispiel: ETILab^{®}, Firma Sorin und BEP^{®} 2000, Dade Behring). Damit wird völlige Verschleppungsfreiheit erzielt.

Eine gänzlich andere Form der Kontamination wird durch analythaltiges Probenmaterial hervorgerufen, das sich nach erfolgter Aufnahme von Probenmaterial an der Außenwand von Dauerspitzen oder Wechselspitzen befindet und bei Bewegungen des Pipettors (Pipettiereinheit) über leere oder gefüllte Reaktionsgefäße abtropfen kann. In der Folge kommt es zu ähnlichen falsch-positiven Resultaten wie beim o.g. carry-over-Effekt. Im Unterschied sind hier jedoch keine systematischen Häufungen an bestimmten Positionen erkennbar.

Als Stand der Technik gilt eine wirkungsvolle Gegenmaßnahme dann als realisiert, wenn sich ein derartiges Abtropfen experimentell bei Pipettiervorgängen hochkonzentrierter Farblösungen optisch nicht mehr nachweisen läßt. Dies wird typischerweise durch zahlreiche Pipettiervorgänge entweder an mehreren Positionen, idealerweise über alle vorstellbaren Positionierungen von Reaktionsgefäßen durchgeführt (im Fall von Vertiefungen von Mikrotitrationsplatten als Reaktionsgefäß über die gesamte Platte und alle Positionen der Mikrotitrationsplatte betreffend).

Erreicht werden Verbesserungen derzeit entweder mit einem Fliesspapier, das mit der Pipettenspitze zum Abstreifen von an der Außenoberfläche haftendem Probenmaterial durchstoßen wird (Mikrolab AT Plus^{®}, Firma Hamilton) oder durch Programmierung von Verweildauer-Zeiten des Pipettors (BEP^{®} 2000, Firma Dade Behring) und/oder Geschwindigkeitsregulierung der mechanischen Bewegung der Pipettoreinheit (DITI 200 AC/C^{®}, Firma Tecan).

Schließlich kann auch mit Hilfe der Flüssigkeits-Detektion (mittels Ultraschall oder kapazitiv) eine geringe Eintauchtiefe der Spitze in Probenmaterial erreicht werden. Mit Eintauchtiefen von wenigen Zehntel Millimeter wird ein Mitschleppen von Flüssigkeitsresten an der Außenseite der Spitzen wirkungsvoll reduziert (beispielsweise Multiprobe-^{®} Systeme der Firma Canberra Packard).

Trotz dieser dem Fachmann bekannten Effekte und der möglichen Gegenmaßnahmen können gemäß Stand der Technik noch vereinzelte falsch-positive Reaktionen auftreten, die durch einen gänzlich anderen Effekt erzeugt werden:
sowohl bei Nadeln für den Dauergebrauch als auch bei Wechselspitzen kann es zu Überschwappungen bzw. Überspritzen von analythaltigem Probenmaterial in benachbarte Reaktionsgefäße kommen.

Derartige sogenannte "spill-over-Effekte" kommen sporadisch vor, wenn die Geometrie entweder der Reaktionsgefäße und/oder der Wechselspitzen als Einmalartikel gewisse Abweichungen aufweisen: dann kann es dazu kommen, daß bei gegebener Abgabecharakteristik der Pipettoreinheit der Probenstrahl physikalisch so ungünstig abgegeben wird, daß kleine Tröpfchen aus den vorgesehenen Reaktionsnäpfchen in benachbarte Reaktionsgefäße "überschwappen". Typischerweise beschränkt sich dieser Effekt auf die unmittelbare Umgebung der Position von analythaltiger Probe; im Unterschied zum carry-over sind nicht die zeitlich/örtlich nachfolgenden Positionen betroffen sondern in kreisförmiger Anordnung nur die örtlich unmittelbar benachbarten Reaktionsgefäße.

Enzygnost^{®} - Teste (ELISA-System der Firma Dade Behring) sollten auf das von der Firma Stratec, Birkenfeld, entwickelte BEP^{®} 2000 - System (Hardware und Software, incl. Steuerungssoftware) als Vollautomaten zur ELISA-Abarbeitung adaptiert werden.

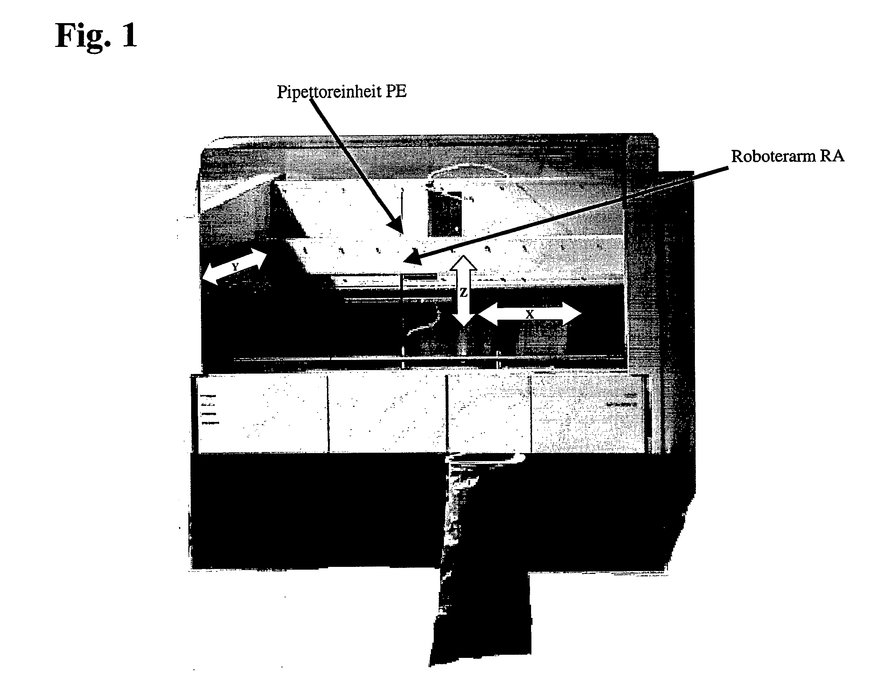

Bei dem in Fig. 1 dargestellten BEP^{®} 2000 handelt es sich um den von der Firma Stratec entwickelten Vollautomaten u.a. für die Abarbeitung aller Einzelschritte eines ELISAs.

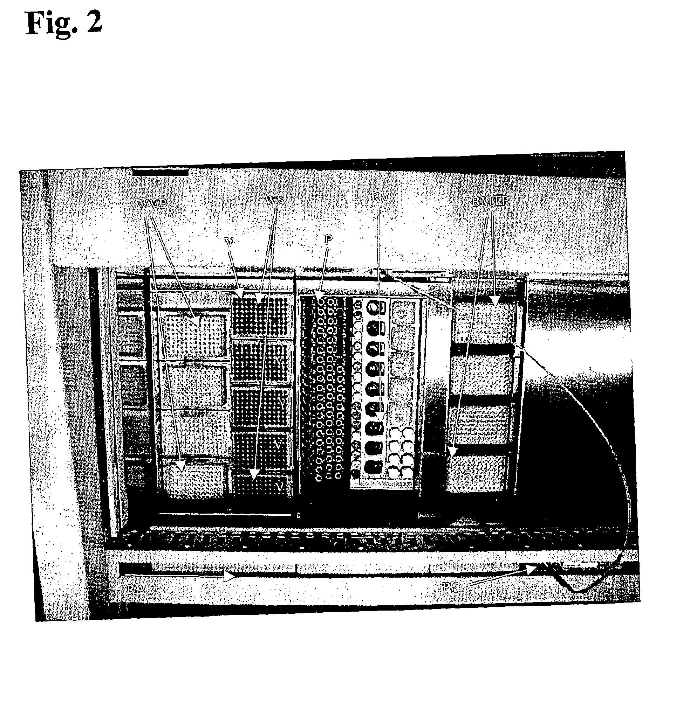

Wie aus der Fig. 1 und 2 hervorgeht, wird mit dem auf der y-Ebene beweglichen Roboterarm (RA), der die in x- und z-Richtung bewegliche Pipettoreinheit (PE) trägt, zunächst eine 300 µl- oder 1100 µl Wechselspitzen (WS) aus dem dafür vorgesehenen Vorrat (V) aufgenommen. Dann fährt der RA die Primär-Röhrchen (P) an und entnimmt einem Röhrchen ein gewisses Volumen-Aliquot der Probe, wobei die Flüssigkeits-Oberfläche über Kapazitätsmessungen erkannt und nur ganz oberflächlich in das Probenmaterial eingetaucht wird.

Das Aliquot wird für Tests, die mit unverdünnten Probenvolumina arbeiten, direkt in die vorgelegten beschichteten Mikrotitrationsplatten (BMTP) pipettiert.

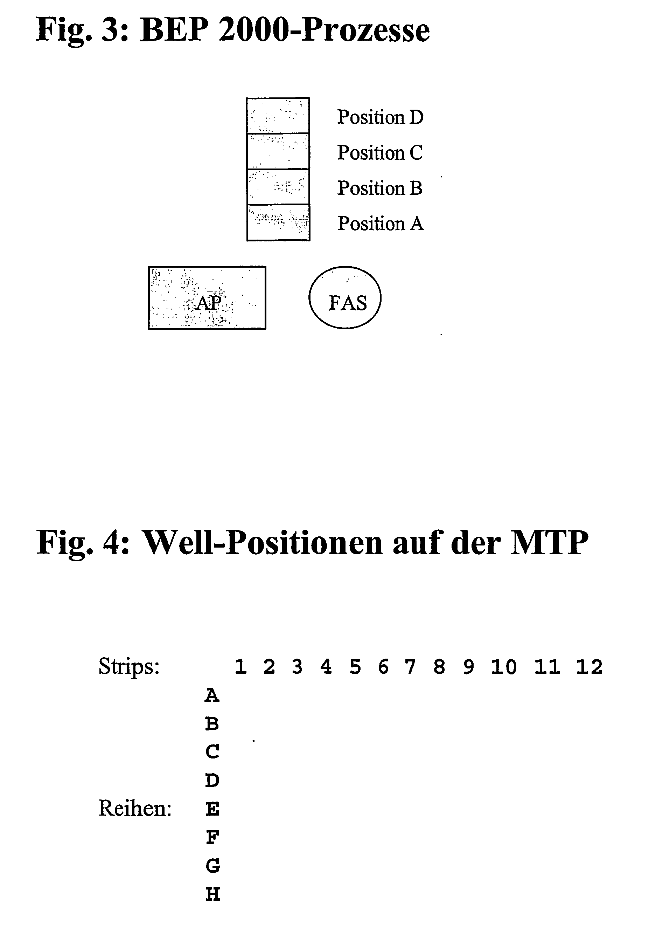

Fig. 3 zeigt eine schematische Aufsicht auf die Arbeitsfläche des BEP 2000 im Bereich der beschichteten Mikrotitrationsplatten (von oben). Die beschichteten Platten stehen auf den Positionen A bis D und werden in der Reihenfolge A, B, C und D von der Pipettoreinheit mit Proben belegt. Anschließend wird die Flüssigabfall-Station (FAS) angefahren, um überschüssig aufgenommenes Probenvolumen abzugeben. Dieser Überschuß, auch "oversoak" genannt, wird benötigt, um das für den Test effektiv benötigte Probenvolumen präzise zu pipettieren. Nach Flüssigkeitsabgabe wird die Abwurfposition (AP) angefahren, um die Einwegspitzen abzuwerfen und durch Aufnahme einer neuen Spitze eine nachfolgende Probe erneut zu pipettieren.

Bei Tests, die mit vorverdünntem Probenmaterial arbeiten, bewegt sich der RA vor der Proben-Aliquotaufnahme über den in Fig. 2 abgebildeten Reagenz-Vorrat (RV), um zunächst eine definierte Menge von Probenverdünnungs-Puffer aufzunehmen. Beide Volumina werden nach Anfahren der Vorverdünnungsposition (WP) in unbeschichtete Gefäße (Mikrotitrationsplatten oder Röhrchen) abgegeben und von dort in die BMTP pipettiert, gefolgt von den seriellen Abfolgen wie für unverdünnte Proben-Prozessierung beschrieben.

Wenn alle über die Software definierten Proben in der beschriebenen Abfolge in die dafür vorgesehenen BMTP in den Positionen der Fig. 3 pipettiert worden sind, werden die mit Probenmaterial bestückten BMTP mit einem mechanischen Beförderer (Aufzug) für die erste Inkubation in die dafür vorgesehenen Inkubationskammern gefahren. Die Inkubationskammern befinden sich in einer unter der Proben- bzw. Pipettier-Ebene des Gerätes befindlichen Arbeitsebene und stellen entweder temperierbare Einheiten dar oder Kammern mit Umgebungstemperatur (Raumtemperatur).

In räumlicher Nähe plaziert sind die Waschvorrichtung zum Entfernen überschüssiger Probe oder Reagenzflüssigkeit aus den BMTP sowie die Meßeinrichtung (Photometer o.ä.) zur Messung des Testresultates.

Bezüglich Hard- und Software ist das BEP^{®} 2000 - System von einigen marginalen, das weiter unten beschriebene erfindungsgemäße Verfahren nicht betreffende Modifikationen abgesehen, baugleich mit unter verschiedenen Handelsnamen kommerzialisierten Systemen anderer Anbieter, die das von Stratec entwickelte System unter generischen Namen vertreiben, wie beispielsweise das ETIMax 3000^{®}, Firma DiaSorin.

Sowohl die entsprechenden Hardwareausführungen wie auch die Steuerungssoftware wurden von Stratec gemäß Stand der Technik so optimiert, daß weder mit Pipettierversuchen von gängigen Farbstofflösungen noch mit verbreiteten Enzygnost^{®} -Testverfahren eine der oben beschriebenen systematischen Interferenzen meßbar ist.

Bei den Enzygnost^{®} -Testen handelt es sich um ELISA-Verfahren zum spezifischen Nachweis von Antigenen oder Antikörpern im Mikrotitrationsplattenformat, wobei die zu Grunde liegenden Testprinzipien vielfältig und dem Fachmann bekannt sind.

Beispielsweise werden für herkömmliche Antikörperbestimmungen, beispielsweise Rubella-spezifische Antikörper der Immunglobulinklasse G (IgG), die Innenoberfläche der Vertiefungen von Mikrotitrationsplatten (Reaktionsgefäß oder Well) mit dem korrespondierenden Antigen (hier: Rubellavirus-Antigen) werksseitig adsorptiv beschichtet.

Vom Anwender (oder Automaten) werden zu bestimmende Proben 1: 21 in Probenpuffer vorverdünnt, einzeln in die Vertiefungen eingebracht, wo nochmals eine Verdünnung von 1:11 erfolgt (Endverdünnung 1:231). Sofern spezifische Antikörper im Probenmaterial (Anti-Rubellavirus-IgG) vorhanden sind, binden diese an das immobilisierte Antigen (Immunkomplexbildung: Anti-Rubellavirus-IgG der Probe / Rubellavirus-Antigen auf der Festphase). Nach 1-stündiger Inkubation (37°C) wird die vedünnte Probe mit überschüssigen Antikörpern durch mehrfache Waschschritte entfernt und der festphasengebundene Immunkomplex mit sogenanntem Konjugat inkubiert (1 h bei 37°C).

Bei dem Konjugat handelt es sich um Anti-Human-IgG (durch Immunisierung im Kaninchen erzeugt), welches kovalent mit Meerettichperoxidase (POD) gekoppelt wurde (Anti-Human-IgG / POD-Konjugat). Nach Bindung dieses Konjugates an den festphasengebundenen Immunkomplex wird überschüssiges Konjugat durch mehrere Waschzyklen entfernt und anschließend mit einer Chromogen-Puffersubstrat-Lösung inkubiert. Dabei handelt es sich um ungefärbtes Tetramethylbenzidin, das von POD mit Wasserstoffperoxid (Substrat) in eine blau gefärbte Lösung überführt wird.

Die Reaktion wird nach 30-minütiger Inkubation bei Raumtemperatur mit Stopplösung (Schwefelsäure) gestoppt und die Farbintensität (Extinktion) photometrisch bestimmt.

Es besteht ein proportionaler Zusammenhang zwischen Farbintensität und der Konzentration rubellavirusspezifischer Antikörper, wobei die Reaktionsgefäße mit analytfreien Proben farblos bleiben bzw. Extinktionen aufweisen, die unterhalb eines für jeden Test durch Klinische Prüfungen ermittelten Grenzwertes (cut off-Wert) liegen.

Analog werden spezifische Antikörper der M-Klasse (beispielsweise mittels Enzygnost-Anti-Rubella-Virus /IgM) mit der gleichen Festphase bestimmt, wobei die Probenverdünnung nur 1:42 beträgt und das Konjugat IgM-spezifisch ist (Anti-Human-IgM / POD-Konjugat). Ansonsten erfolgt die Bestimmung wie oben beschrieben.

Ähnlich wie Enzygnost^{®} Anti-Rubella-Virus/IgG aufgebaute Testprinzipien für die Bestimmung von humanem Antigen-spezifischen IgG liegen den folgenden Enzygnost^{®} -Testen zu Grunde:
Enzygnost^{®} Anti - CMV/, -EBV/, -HSV/, -VZV/, Masern-Virus/ und Anti-Parotitis-Virus / IgG.

Bei der automatischen Abarbeitung dieser Teste auf dem BEP^{®} 2000 traten absolut keine Kontaminationen von Probenmaterial in Form falsch-positiver Reaktionen auf.

Überraschend wurde allerdings bei der Bearbeitung hochsensitiver Enzygnost^{®} - Tests mit dem BEP^{®} 2000 (von beispielsweise Anti-HIV und HBsAg) festgestellt, daß Kontaminationen dennoch in störender Art und Weise auftreten.

Der Unterschied zwischen den zuvor genannten Enzygnost^{®} -Testen und den hier zu betrachtenden hochsensitiven Enzygnost^{®} -Testen ist folgender:
- es werden keine Probenverdünnungen aufgetragen sondern 100 µl unverdünntes humanes Probenmaterial;
- natürlicherweise kommen die zu untersuchenden Analyten in sehr hohen Konzentrationen in humanem Serum oder Plasma vor;

Bei Enzygnost^{®} HBsAg 5.0 handelt es sich zum Beispiel um einen Antigen-Nachweis, wobei die Mikrotitrationsplatte mit HBsAg-spezifischem Antikörper beschichtet ist (durch Immunisierung am Schaf erzeugt).

HBsAg der Probe wird gleichzeitig mit Konjugat 1 in den Reaktionsgefäßen inkubiert, das aus monoklonalem, in der Maus erzeugtem HBsAg-spezifischem Antikörper besteht (Ein-Schritt-Verfahren über 60 min. bei 37°C / Antikörper-Sandwich-Verfahren oder immunometrisches Testprinzip), wobei der Fänger-Antikörper auf der Festphase entweder HBsAg / Anti-HBsAg-Antikörper - Komplexe bindet oder zunächst freies HBsAg, an das sich dann Konjugat 1 anlagert, um dann als Immunkomplex an die Festphase zu binden.

Im Unterschied zu den eingangs beschriebenen Enzygnoset^{®} - Anti-Rubella-Virus / IgG und IgM- Testen ist der Marker des Konjugates nicht POD sondern Biotin, das ein Vitamin und kein Enzym darstellt. Hintergrund ist ein spezielles Verstärkersystem zur Steigerung der Empfindlichkeit (Amplifikation). Gemäß dem Stand der Technik wird die außerordentlich hohe Affinität von Biotin zu dem Protein Streptavidin ausgenutzt, indem nach Auswaschen überschüssigen Konjugates ein weiteres Konjugat 2 inkubiert wird (30 min. bei 37°C). Dieses besteht aus Streptavidin, an das kovalent POD gebunden ist.

Die abschließende Farbstoffentwicklung, Stoppen der Reaktion und photometrische Bestimmung sowie Auswertung der Extinktionen erfolgt analog der beschriebenen Methodik der indirekten Tests.

Da sowohl Konjugat 1 als auch Konjugat 2 multiple Bindungspartner über ein Kohlenhydrat-Gerüst enthalten, ergibt sich zusammen mit der hohen Bindungsstärke zwischen Biotin und Streptavidin ein zweifacher Verstärkermechanismus mit einer um mindestens den Faktor 5 verbesserten Nachweisgrenze von HBsAg gegenüber herkömmlichen Verfahren.

Enzygnost^{®} HIV Integral stellt einen kombinierten Nachweis von HIV-spezifischen Antikörpern (Anti-HIV) und HIV-Antigen (p24-Antigen) dar, wobei beide Analyten unter Verwendung des Biotin-Streptavidins bestimmt werden.

Mikrotitrationsplatten werden mit immunologisch relevanten Proteinen von HIV 1, HIV 2 und HIV O beschichtet, an die in der Probe enthaltende Antikörper (Anti-HIV) in einer ersten Inkubation binden (30 min. bei 37°C). Nach Entfernen überschüssiger Probe (Antikörper) durch mehrere Waschzyklen erfolgt die Zugabe von Konjugat 1, das HIV-Antigene (HIV 1, 2 und O) enthält, die gleichzeitig mit Biotin an ein Kohlenhydrat-Gerüst gebunden vorliegen (Antigen-Sandwich-Methode oder immunometrischer Testaufbau).

Zusätzlich zu den HIV-Proteinen enthält die Festphase polyklonale HIV p24-spezifische Antikörper, die durch Immunisierung im Kaninchen erzeugt wurden. Sofern HIV-p24 in einer Probe vorhanden ist, wird dieses in o.g. Inkubation gebunden und mit Konjugat 1 detektiert, das an Kohlenhydrat gebunden zusätzlich zwei monoklonale p24-spezifische Antikörper enthält, die in der Maus erzeugt wurden.

Nach 30 minütiger Inkubation (37°C) und Waschvorgängen wird Konjugat 2 zugegeben, welches wie bei Enzygnost^{®} HBsAg 5.0 aus Streptavidin und Peroxidase besteht (beide Komponenten sind kovalent an ein Kohlenhydratgerüst gebunden).

Die sich anschließenden Schritte Inkubation, Waschen, Chromogen-Entwicklung, Stoppen und photometrische Auswertung erfolgt identisch wie bei Enzygnost^{®} HBsAg 5.0 beschrieben.

Auch im Fall dieser Anti-HIV- und p24- Bestimmung mit Enzygnost^{®} HIV Integral konnte im Rahmen der Klinischen Prüfung gezeigt werden, daß die Empfindlichkeit des Tests um einen Faktor von größer als 4 gegenüber früheren Bestimmungsmethoden verbessert werden konnte.

Beide Enzygnost^{®} -Tests wurden zwischen 1998 und 1999 entwickelt und kommerzialisiert, um den stetig wachsenden Ansprüchen an derartige Tests Rechnung zu tragen:

Einerseits soll die Empfindlichkeit der HBsAg- und HIV-Bestimmung sowohl im Sinne der diagnostischen Sicherheit als auch der Sicherheit im Blutspendewesen maximal, andererseits Störungen im Sinne falsch positiver Reaktionen möglichst klein sein.

Der Grad der Empfindlichkeit wird als Sensitivität durch Testung von definierten Probenkollektiven (Angabe in %), durch Bestimmung von Proben aus sehr frühen Infektionsstadien (Angabe als frühester Zeitpunkt nach Infektion, zu dem erstmalig spezifischer Analyt - Antigen oder Antikörper - nachweisbar ist) und durch Testung serieller Verdünnungen von analythaltigem Probenmaterial definiert (Angabe in Verdünnungsstufe, die noch positiv ermittelt wurde).

Umgekehrt wird die Zuverlässigkeit bei negativen, analytfreien Proben über die sogenannte Spezifität beschrieben, die prozentual angibt, wie viele tatsächlich negative Proben richtig negativ bestimmt wurden und zwar entweder nach einmaliger Testung (Initialwert) oder nach Wiederholung der initial reaktiven Proben (Retest-Wert).

Derzeitig im Einsatz befindliche moderne HBsAg und Anti-HIV-Bestimmungen weisen Sensitivitätswerte von > 99,98 % auf, und typische Spezifitäten können mit > 99,3 % (initial) und > 99,7 % (retest) beschrieben werden. Diese Angaben sind herstellerunabhängig, beziehen sich auch auf andere Analyten wie beispielsweise Hepatitis C-spezifische Antikörper (Anti-HCV) oder Treponema pallidumspezifische Antikörper (Anti-Treponema pallidum) und sollen in der Praxis unabhängig von der Art der Instrumentation erzielt werden.

Überraschend wirkten sich die am BEP^{®} 2000 -System beobachteten Kontaminationen auf die Kennzahl Spezifität von Enzygnost^{®} HIV Integral und Enzygnost^{®} HBsAg 5.0 so aus, daß nur noch Initialwerte zwischen 92% und 94% erzielt wurden (siehe Beispiel 3, sowie Tab. 1 und 2), obwohl bisher bekannte Kontaminationen, insbesondere auch ein carry-over-Effekt im Hinblick auf die Wechselspitzen mit den bekannten Methoden ausgeschlossen werden konnten.

An Hand eigens entwickelter Modellsysteme wurde festgestellt, daß die falsch-positiven Reaktionen durch Bildung kleinster Spritzer in der Größenordnung von etwa 0,1 bis 1 nl (entspricht einer Verdünnung von etwa 1:10⁶) verursacht werden, die beim Pipettiervorgang von analythaltigen Proben und bei der mechanischen Bewegung der Pipettiereinheit entstehen.

Außerdem wurde festgestellt, daß auch weniger sensitive Tests dann betroffen sind, wenn der betreffende Analyt biologisch bedingt in extrem hohen Konzentrationen auftreten kann. Beispiele dafür sind die Bestimmungen von Antikörpern gegen Hepatitis A Virus-Antigen (Anti-HAV) und gegen Hepatitis B Virus-Antigen (Anti-HBs).

Zusätzlich wurde auch mit Modellen nachgewiesen, daß sowohl bei der Abgabe von überschüssigem Probenmaterial sowie beim Abwurf der Wechselspitzen ebenfalls kleinste Spritzer (keine sichtbaren Tropfen) in oben genannter Größenordnung entstehen können, die zu Störungen von Tests mit höchster Empfindlichkeit führen können.

Insgesamt sind damit eine Vielzahl von Parametern von Störungen betroffen, die unabhängig von der konkreten Ausführungsform eines immunchemischen Bestimmungsverfahrens und mit jedem Probenverteiler oder Probenverteiler-Modul zu erwarten sind, der oder das analog zum BEP^{®} 2000 - Instrument arbeitet (wie beispielsweise ETILab^{®}, Firma DiaSorin) oder mit diesem in Hardware- sowie Systemsteuerungsaspekten sogar baugleich ist (beispielsweise ETIMax 3000^{®}, Firma DiaSorin.)

Besonders störend werden sich derartige Effekte neben den beschriebenen ELISA-Verfahren bei Anwendungen darstellen, die auf allerhöchste Präzision und Empfindlichkeit ausgelegt sind wie beispielsweise gentechnologische Amplifikationsverfahren, bei denen bekanntermaßen selbst die geringfügigsten Kontaminationen meßbar sind.

Der vorliegenden Erfindung lag nun die Aufgabe zu Grunde, diese neuen und dem Ausmaß nach bisher nicht bekannten Störungen systematisch zu beschreiben und Verfahren zu entwickeln, mit denen insbesondere hochempfindliche Tests nicht mehr durch Kontaminationen von Probenmaterial im Sinne von falsch-positiven oder fälschlicherweise zu hoch positiven Befunden gestört werden.

Überraschend wurde nun gefunden, daß es durch Definition einer Anzahl von Kenngrößen der Pipettoreinheit des BEP^{®} 2000 - Systems möglich ist, die Spritzerbildung beim Pipettiervorgang signifikant zu verringern oder zu verhindern.

Ferner wurde gefunden, daß negative Auswirkungen auf die Richtigkeit der Testergebnisse der bisher unbekannten Spritzer, die beim Abgeben überschüssigen Probenvolumens entstehen, wirkungsvoll durch Anbringung einer mechanischen Schutzvorrichtung zwischen der Flüssigabfall-Station und der Position von beschichteten Mikrotitrationsplatten unterdrückt werden können.

Gegenstand der Erfindung sind nachfolgend im Detail beschriebene Verfahren zum schnellen Visualisieren und Optimieren der Effekte sowie Verfahren, die gezielt über die Steuerungs-Software der Pipettoreinheit derartige Kontaminationen verhindern. Auch Gegenstand der Erfindung ist eine Hardware-Ergänzung oder Modifikation der Flüssigabfall-Station, was beispielsweise in Form einer Abdeckung möglich ist, die Kontaminationen in Form von Mikrospritzern wirkungsvoll vermeidet.

Vorliegende Erfindung betrifft somit ein Verfahren zur Reduzierung der Kontamination von leeren oder bereits mit analytfreiem oder in geringer Konzentration analythaltigem Probenmaterial bestückten Reaktionsgefäßen innerhalb einer Anordnung in räumlicher Nähe zueinander befindlicher Reaktionsgefäße während der Pipettierung von Proben oder Reagenzien mit einem automatischen Probenverteiler, **dadurch gekennzeichnet, daß** durch Verwendung eines Enzym/ Substrat-Farbstoff-Tests zunächst das Ausmaß der Kontamination mittels Modell A festgestellt wird:
a) Zugabe einer Enzymlösung zu Reaktionsgefäßen eines Teilbereichs besagter räumlicher Anordnung, während die übrigen Reaktionsgefäße mit einem saugfähigen schichtförmigen Material abgedeckt sind, welches ein geeignetes Chromogen/Substrat-Reagenz enthält, wobei durch dessen Kontakt mit dem Enzym eine Farbreaktion ausgelöst wird,
b) Bestimmung von Anzahl, Intensität und/oder Verteilung der durch eine Farbentwicklung gekennzeichneten abgedeckten Reaktionsgefäße,
und anschließend die Flüssigkeitsaufnahme (Aspirate Profile) und
Flüssigkeitsabgabe (Dispense Profile) so modifiziert werden, daß Anzahl oder Intensität der durch Farbentwicklung gekennzeichneten Reaktionsgefäße verringert wird.

Die Erfindung betrifft weiterhin ein Verfahren zur Reduzierung der Kontamination von leeren oder bereits mit analytfreiem oder in geringer Konzentration analythaltigem Probenmaterial bestückten Reaktionsgefäßen innerhalb einer Anordnung in räumlicher Nähe zueinander befindlicher Reaktionsgefäße während der Pipettierung von Proben oder Reagenzien mit einem automatischen Probenverteiler, **dadurch gekennzeichnet, daß** durch Verwendung eines Enzym/Farbstoff-Tests zunächst das Ausmaß der Kontamination mittels Modell B festgestellt wird:
a) Zugabe einer Enzymlösung zu Reaktionsgefäßen eines Teilbereichs besagter räumlicher Anordnung,
b) Zugabe eines geeigneten Chromogen/Substrat-Reagenzes, welches bei Kontakt mit dem Enzym eine Farbreaktion auslöst, zu den Reaktionsgefäßen des übrigen Teilbereichs besagter räumlicher Anordnung,
c) Ermittlung möglicher Kontaminationen durch Bestimmung der Farbentwicklung in den Reaktionsgefäßen;
und anschließend die Flüssigkeitsaufnahme (Aspirate Profile) und
Flüssigkeitsabgabe (Dispense Profile) so modifiziert wird, daß Anzahl oder Intensität der durch Farbentwicklung gekennzeichneten Reaktionsgefäße verringert wird.

In den genannten erfindungsgemäßen Verfahren können die Reaktionsgefäße Kavitäten einer Mikrotitrationsplatte sein. Insbesondere betrifft die vorliegende Erfindung ein solches Verfahren, worin:
a) der automatische Probenverteiler Teil eines BEP 2000 oder eines damit im wesentlichen baugleichen Vollautomaten ist; und
b) die Anordnung von in räumlicher Nähe zueinander befindlichen Reaktionsgefäßen aus einer linearen, in einer horizontalen Ebene liegenden Anordnung von 4 Mikrotitrationsplatten in der Sequenz: Position A, Position B, Position C und Position D gemäß Fig. 3 besteht; und
c) eine Flüssigabfall-Station (FAS) in unmittelbarer Nähe zur Position A in ungefährer Verlängerung der gedachten Linie von Position D bis Position A positioniert ist; und
d) die Zugabe der Enzymlösung in einem Teilbereich der Mikrotitrationsplatte in den Positionen A bis D; und
e) die Ermittlung möglicher Kontaminationen insbesondere die von der Flüssigabfall-Station (FAS) ausgehenden Kontaminationen einschließt.

Umfaßt ist auch eine Variante des vorstehend beschriebenen Verfahrens, worin die Flüssigabfall-Station (FAS) von einer oberen Abdeckelung abgedeckt wird und eine darin befindliche Öffnung möglichst klein dimensioniert ist, so daß einerseits optimaler Schutz vor Spritzern aus der Flüssigabfall-Station (FAS) bewirkt wird, jedoch andererseits die Abgabe von überschüssigem Probenvolumen durch diese Öffnung in die Flüssigabfall-Station (FAS) hinein reproduzierbar so möglich ist, daß dabei keine Flüssigkeit versehentlich mit dem Rand der Öffnung in Berührung kommt.

Die Flüssigabfall-Station (FAS) kann vorteilhafterweise auch von vornherein so geformt sein, daß die obere Gefäßwandung der Abdeckelung entspricht, so daß eine separate Abdeckelung unter Beibehaltung ihrer Funktionalität entfallen kann.

Des weiteren ist es von Vorteil, wenn die Flüssigabfall-Station (FAS) durch Anbringung einer mechanischen Schutzvorrichtung zwischen der Flüssigabfall-Station und der Positionen der beschichteten Mikrotiterplatten getrennt wird, womit Kontaminationen verhindert werden.

Vorliegende Erfindung betrifft auch eine Flüssigabfall-Station, die sich zur Verwendung in einem der vorstehend beschriebenen erfindungsgemäßen Verfahren eignet und die von einer oberen Abdeckelung abgedeckt wird, wobei eine darin befindliche Öffnung möglichst klein dimensioniert ist, so daß einerseits optimaler Schutz vor Spritzern aus der Flüssigabfall-Station bewirkt wird, jedoch andererseits die Abgabe von überschüssigem Probenvolumen durch diese Öffnung in die Flüssigabfall-Station hinein reproduzierbar so möglich ist, daß dabei keine Flüssigkeit versehentlich mit dem Rand der Öffnung in Berührung kommt. Die Flüssigabfall-Station kann vorteilhafterweise auch von vornherein so geformt sein, daß die obere Gefäßwandung der Abdeckelung entspricht, so daß eine separate Abdeckelung unter Beibehaltung ihrer Funktionalität entfallen kann.

Jedes einzelne vorstehend beschriebene erfindungsgemäße Verfahren sowie jede erfindungsgemäße abgedeckelte Flüssigabfall-Station trägt für sich zur Vermeidung von Kontaminationen bei. Idealerweise kommen mehrere oder alle erfindungsgemäße Verfahren, möglichst in Kombination mit einer erfindungsgemäßen abgedeckelten Flüssigabfall-Station zur Anwendung, ohne daß sich die vorliegende Erfindung jedoch auf die kombinierte Anwendung beschränkt.

Dem Stand der Technik entsprechend wird die Software für Probenverteiler so ausgelegt, daß sie Programmierungen wichtiger Kenngrößen wie beispielsweise Aufnahme- und Abgabe-Geschwindigkkeit von Flüssigkeiten erlaubt. Dies wird sogar als unverzichtbar angesehen, da diese Merkmale auf das Untersuchungsgut im Hinblick auf dessen Eigenschaften (wie beispielsweise Viskosität) angepaßt werden muß (A. Frittrang; Laborpraxis, Dezember 1996). Allerdings werden diese Anpassungen, ähnlich wie Optimierungen der Präzisionsspritzen (sogenannte Dilutoren) oder auch der Nadeldurchmesser, allgemein nur im Zusammenhang mit Optimierungen von Präzision und Richtigkeit des Pipettiervolumens vorgenommen. Die Programmierung selbst kann über Firmware-Module oder Steuerungsoftware des Gesamtsystems realisiert und als Bestandteil der Betriebssoftware sogar dem Anwender zugänglich sein.

Als weitere Literaturbeispiele werden die Anweisungen der Firma Tecan zum Thema Liquid-Handling genannt: Liquid Handling Manual for DITI 200 AC/C (Docu. No. 390548); Option DITI 200 AC/C (Docu. No. 390542); Gemini-Softwarehandbuch Nr. 39 1354 V3.10 vom Sept. 1999 (Handbuch No. 391354, V 3.10). In diesen Manuals, wie auch in einschlägigen Fachbüchern, wie beispielsweise W. Wagner: "Stömungstechnik und Druckverlust-Berechnung" ; Vogel Buchverlag, werden Veränderungen der Aufnahme- und Abgabe-Parameter im Zusammenhang mit der Präzision und Richtigkeit der Pipettierprozesse unter besonderer Berücksichtigung der Viskosität eines gegebenen Probenmaterials beschrieben. Es finden sich allerdings weder in den diesbezüglichen Optimierungsanweisungen noch in entsprechenden Listen möglicher Fehlerquellen (sogenannte "trouble shooting guides") spezifische Hinweise auf den Nachweis oder die Vermeidung von Kontaminationen durch kleinste Probenvolumina.

Der einzige Hinweis im Liquid Handling Manual for DITI 200 AC/C (s.o.) bezieht sich auf ausgeprägte, visuell erkennbare Tropfenbildung am Ausgang der Spitzen und beschreibt damit eher eine technische Störung oder fehlprogrammierte Funktion als eine gezielte Maßnahme zur Vermeidung von kleinsten Spritzern ("Mikro-Spritzern") im Nanoliter-Maßstab.

Wie bei den meisten Pipettierautomaten sind auch beim BEP 2000 im sogenannten "System Setup" Softwareeinstellungen veränderbar, um die physikalischen Kenngrößen der Proben-Aufnahme und Abgabe zu verändern.

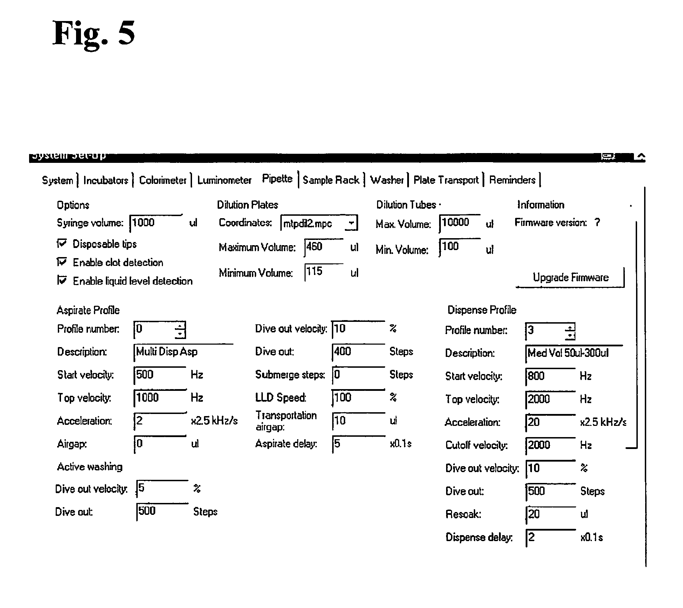

Beispiele für derartige Einstellungen sind für die **Proben-Aufnahme** ("aspirate profile", s. Fig. 5), die im Sinne der vorliegenden Erfindung gezielt modifiziert wurden:
- "Start velocity": beschreibt die Anfangsgeschwindigkeit der Probenaufnahme;
- "Top velocity": beschreibt die maximal erreichte Geschwindigkeit der Probenaufnahme;
- "Dive out velocity": beschreibt die Geschwindigkeit, mit der die Spitze aus der Flüssigkeit nach Probenaufnahme bewegt wird.

Beispiele für derartige Einstellungen sind für die **Proben-Abgabe** ("dispense profile", s. Fig. 5), die im Sinne der vorliegenden Erfindung gezielt modifiziert wurden:
- "Start velocity": beschreibt die Anfangsgeschwindigkeit der Probenabgabe;
- "Top velocity": beschreibt die maximal erreichte Geschwindigkeit der Probenabgabe;
- "Acceleration": beschreibt die Beschleunigung der Probenabgabe;
- "Cutoff velocity": beschreibt die Beschleunigungsgeschwindigkeit beim Beendigen der Probenabgabe (Abrißgeschwindigkeit beim Abbruch des Vorganges);
- "Dive out velocity": beschreibt die Geschwindigkeit, mit der die Spitze aus der Position über den Reaktionsgefäßen nach Probenabgabe wegbewegt wird.

Alle oben angegebenen Parameter wurden von der Firma Stratec unter Berücksichtigung der eingangs geschilderten Kontaminationseffekte nach dem Stand der Technik derart optimiert, daß die dementsprechenden Kriterien erfüllt waren. Die von Stratec auf dieser Basis vorgenommene endgültige Festlegung entspricht den in Fig. 5 abgebildeten Einstellungen.

Diese Profileinstellungen der Fig. 5 wurden auf die automatische Abarbeitung beispielsweise der Testsysteme Enzygnost^{®} Anti-HBc monoclonal, Enzygnost^{®} Anti - HBc/IgM, Enzygnost^{®} Anti-HAV/IgM, Enzygnost^{®} HBeAg monoclonal, Enzygnost^{®} AntiCMV IgG+IgM, Enzygnost^{®} Anti-CMV/IgG, Enzygnost^{®} AntiCMV/IgM, Enzygnost^{®} Anti-Rubella-Virus/IgG, Enzygnost^{®} Anti-Rubella-Virus/IgM, Enzygnost^{®} Anti-HSV/IgG, Enzygnost^{®} Anti-HSV/IgM, Enzygnost^{®} Toxoplasmosis/IgG, Enzygnost^{®} Toxoplasmosis/IgM, Enzygnost^{®} Borreliosis/IgG und Enzygnost^{®} Borreliosis/IgM geprüft, und es wurde eine ausgezeichnete Übereinstimmung aller dem Immunstatus nach negativen und positiven humanen Proben erzielt.

Für die Überprüfung wurden 16 reaktive Proben (A1 bis H2, s.a. Fig. 4) und mehr als 30 bezüglich des jeweiligen Analyten negative Humanproben gleichzeitig auf eine Mikrotitrationsplatte aufgetragen und in den o.g. Tests überprüft.

Die in den Tab. 3, 4 und 5 gezeigten beispielhaften Meßergebnisse (Extinktionseinheiten) für Toxoplasmosis IgG, Rubella IgG u. HSV IgG machen deutlich, daß sich bei diesen Verfahren absolut kein Hinweis auf wie auch immer zustande gekommene Kontaminationen selbst bei gemischter Auftragung von Proben nachweisen läßt: zum einen wurden Proben, die den zu untersuchenden Analyten in extrem hohen Konzentrationen enthalten und zum anderen analytfreie Proben auf der gleichen Testplatte aufgetragen.

Überraschend wurde jedoch mit dem Pipettorprofil der Fig. 5 (Stand der Technik) bei der Anwendung von Enzygnost^{®} HBsAg 5.0 und Enzygnost^{®} HIV Integral bei gemischter Pipettierung von analythaltigen und analytfreien Proben eine signifikante Störung durch Kreuzkontaminationen von Probenmaterial festgestellt. Die Abarbeitung erfolgte in der A-Position der primären Standplätze beschichteter Mikrotitrationsplatten (siehe dazu auch Fig. 3).

Wie die in den Tabellen 1 u. 2 dargestellten Meßergebnisse (der Anti-HIV- u. HBsAg-Bestimmung) deutlich machen, finden sich durchschnittlich 4 bis 6 falsch-positive Einzelresultate pro Testplatte (z.B. auf den Mikrotitrationsplatten-Positionen A1, F5, F7 und A8 der Tab. 1). Dieser Effekt resultiert bezogen auf auf die Gesamtzahl von ca. 60 analytfreien Proben in Spezifitätsdaten zwischen 92 und 94%, während die parallel durchgeführte manuelle Probenauftragung mit anschließender Abarbeitung mit dem BEP III^{®} (automatischer ELISA-Prozessor der Firma Dade Behring) keine falsch-positiven Werte erzeugte.

Für die Optimierung der Abgabe-Einstellgrößen des BEP^{®} 2000 - Pipettors wurde das in Beispiel 1 beschriebene Modell A entwickelt. Es handelt sich dabei um einen extrem sensitiven Enzym/Farbstoff/Test, in dem 100 µl einer hochkonzentrierten Enzymlösung (0,25 mg Peroxidase/ml) von dem Pipettor in Reihe 5 bis 8 einer leeren, unbeschichteten Mikrotitrationsplatte aufgetragen wird (siehe dazu auch Fig. 4). Die entsprechenden Reihen 1 bis 4 und 9 bis 12 wurden mit Filterpapier (das mit festem Plastik-Träger unterstützt wurde) abgedeckt, das mit Chromogen / Puffersubstrat-Lösung getränkt war. Die Herstellung der Gebrauchslösung erfolgte gemäß Packungsbeilage und wird in Beispiel 1 beschrieben.

Der besseren Vergleichbarkeit der Matrix wegen (beispielsweise im Interesse der Übertragbarkeit der Ergebnisse bezüglich Viskositätseigenschaften) wurde als Verdünnungsmedium Serum von gesunden Blutspendern gewählt.

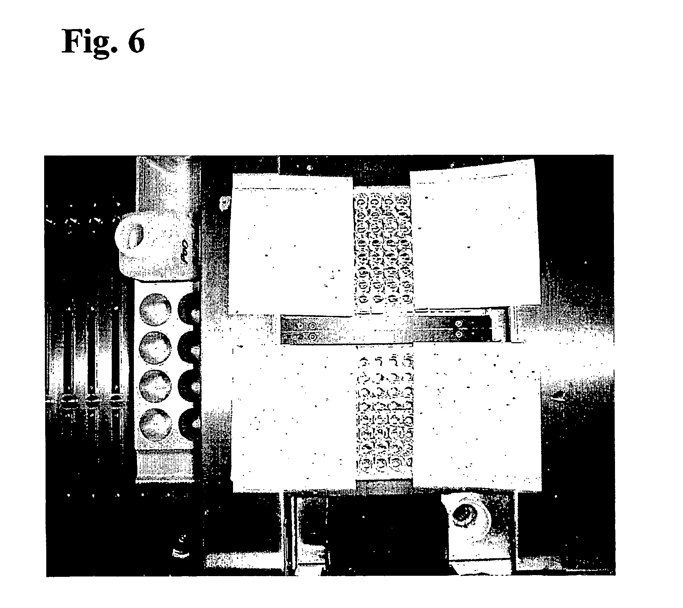

Überraschend wurde mit diesem einfachen Modell gefunden, daß sehr viele Spritzer unterschiedlichster Größen auftreten (Fig. 6).

Die Quantifizierung der sicheren Nachweisgrenze dieser Methodik ergab etwa 0,25 ng POD/ml, was einer Verdünnung von etwas größer als 1 : 10⁵ bzw. einer Tröpfchenbildung in der Größenordnung von 1,0 nl entspricht. Damit können also Kontaminationen visualisiert werden, die jenseits der visuell als Tropfen erkennbaren Grenze liegen und die trotzdem in hochempfindlichen Nachweisverfahren stören.

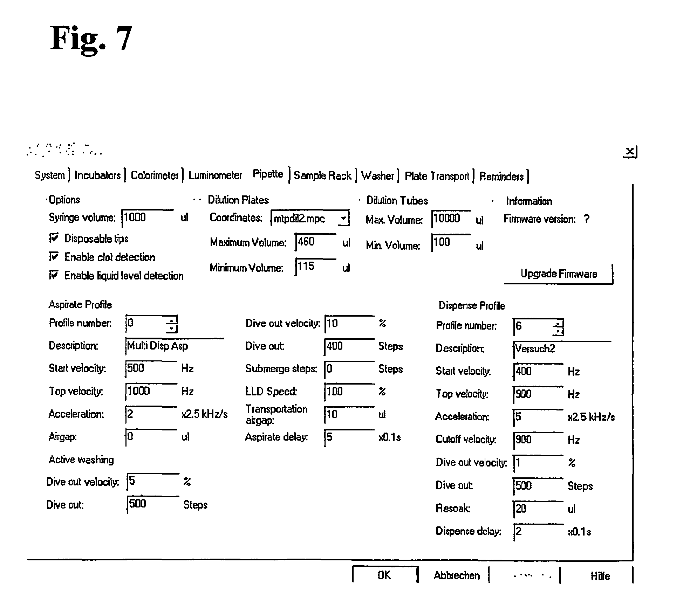

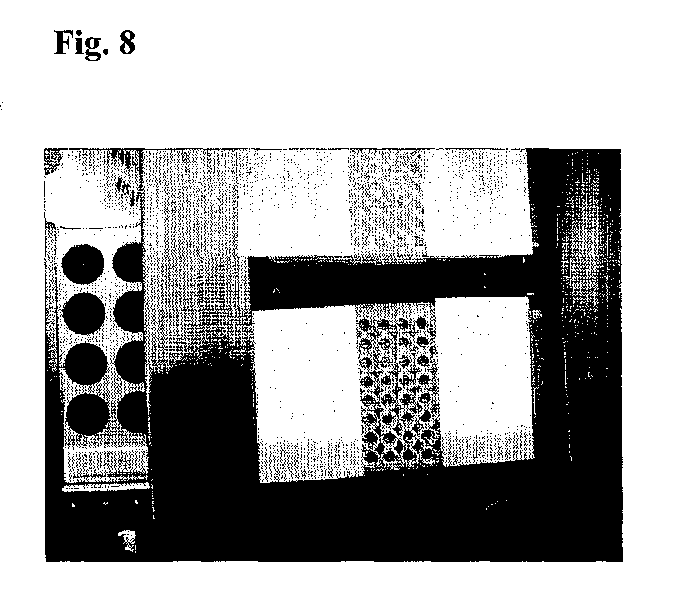

Mit diesem Modell (Modell A) vorgenommene Optimierungen führten zu den in Fig. 7 zusammengefaßten Festlegungen der Dispense Profile und den in Fig. 8 dargestellten nachgewiesenen Verbesserungen.

Es gelang auch, die mit den Maßnahmen minimierten Kontaminationen mit Enzygnost^{®} HBsAg 5.0 darzustellen, allerdings nicht restlos zu beseitigen.

Unter der Annahme, daß die beim Pipettiervorgang enstehenden Aerosole zwar eine Ursache darstellen, aber noch andere Einflußgrößen wirksam sind, wurde ein weiteres System, Modell B (siehe Beispiel 2) entwickelt, das eine klarere Zuordnung von kleinsten Spritzern zum Entstehungsort erlauben sollte.

Dazu wurden mit dem BEP^{®} 2000 -Gerät auf einer Mikrotitrationsplatte in C-Position (siehe dazu auch Fig. 3 und Fig. 4) 100 µl der konzentrierten POD-Lösung in die Reihen 1 bis 4 aufgetragen und in die Reihen 5 bis 12 die Chromogen / Puffersubstrat-Lösung. Die Platten in B- und A- Position wurden auf allen Reihen ausschließlich mit Chromogen / Puffersubstrat-Lösung bestückt, nach 30 min. gestoppt und die Extinktionen in allen Positionen photometrisch gemessen.

Die Quantifizierung der sicheren Nachweisgrenze dieser Methodik ergab einen Wert von 25 pg POD/ml, was einer Verdünnung von etwa 1 : 10⁷ bzw. einer Tröpfchenbildung in der Größenordnung von 0,01 nl entspricht.

Modell B erweist sich damit gegenüber Modell A als wesentlich sensitiver und erlaubt einen hochsensitiven Nachweis von Kontaminationen über die als Stand der Technik hinaus bekannten Empfindlichkeitsgrenzen (siehe Beispiel 2).

Das überraschende Ergebnis unter Standard-Profil-Einstellungen (nach dem Stand der Technik) war, daß nicht nur die Plattenposition C stark von Kontaminationen betroffen war, sondern auch Platten in B-Position als auch Platten in A-Position (Tab. 6, 7 u. 8). Während die C-Position mit Modell A als "Aerosole" durch den Abstoßvorgang erklärbar sind, müssen für die Kontamination von Platten in B und A andere Einflußgrößen wirksam sein, da nicht davon auszugehen ist, daß die Spritzer über so große Distanzen bewegt werden.

Experimentell wurden alle Variablen der Aufsaug- (Aspirate) und Abgabe-Funktionen (Dispense) einzeln variiert und die daraus resultierenden Konsequenzen in Modell A bzw. Modell B (oder in beiden) überprüft. Angewendet wurde eine iterative Vorgehensweise, bei der systematisch jede der auf Seiten 16 u. 17 beschriebenen Variablen in Bezug auf die Kontaminationseffekte optimiert wurde. Verifiziert wurden erfolgreiche Modell-Ergebnisse durch die automatische Abarbeitung der beschriebenen Enzygnost^{®} - Teste mit dem BEP^{®} 2000.

Die Anwendung von Modell B unter optimierten Profil-Einstellungen der Dispensierfunktion (Fig. 7) bestätigte diese Annahme: deutliche Verringerung von Kontaminationen in C, aber nach wie vor Kreuzkontaminationen in A und B (Tab 9, 10 u. 11).

Eine Außenbenetzung der Spitzen und ein dadurch verursachtes Abtropfen von Flüssigkeit bei der Bewegung des Pipettors über die Mikrotitrationsplatten erschien unwahrscheinlich, da die Wechselspitzen über ein kapazitives Mess-System die Flüssigoberfläche detektiert und damit zur Probenaufnahme nur unwesentlich in die Probenflüssigkeit eintaucht.

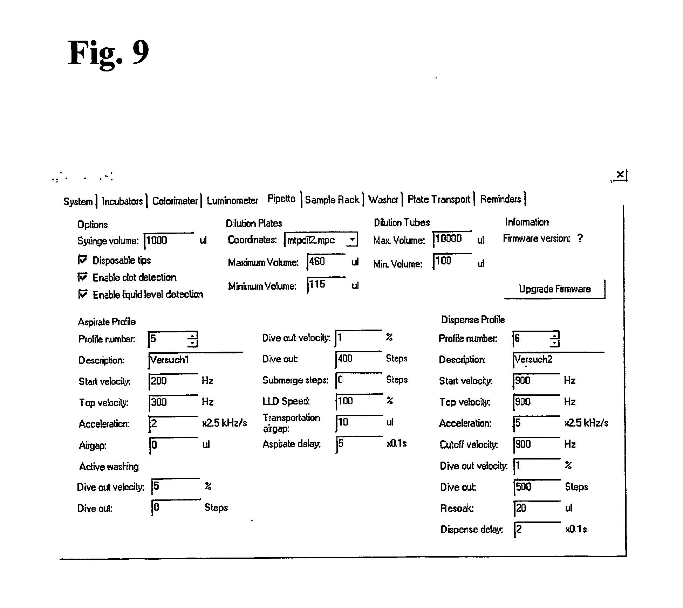

Völlig überraschend wurde mit Modell B der Effekt von Verlust kleinster Probenvolumina (Größenordnung zwischen 0,01 und 0,5 nl) beim Transportvorgang der BEP 2000 - Pipettiereinheit nachgewiesen, was durch geeignete Profile in der Aufsaugphase (Aspirate Profile der Fig. 9) wirkungsvoll unterdrückt werden kann, wie die reduzierten Kontaminations-Effekte in Modell B auf Plattenposition B der Tab 12 deutlich machen.

Die optimierten Aspirate Profile zusammen mit den optimierten Dispense-Profilen (Fig. 7 u. 9) ergeben mit Modell B die in Tab. 13 bis 15 dargestellten typischen Verbesserungen der Kontaminationseffekte. Aus diesen Tabellen geht aber auch hervor, daß auf Platten-Position A nach wie vor Kontaminationen erfolgen, und zwar in den unteren Reihen gehäuft (Tab. 13).

Bei dem Versuch der Abdeckung der Flüssigkeits-Abgabe-Station (Position FAS in Fig. 3) wurde mit optimierten Aspirate- und Dispense-Profilen überraschend das Ergebnis erzielt, daß absolut saubere Platten in den Positionen A, B und C die Folge sind.

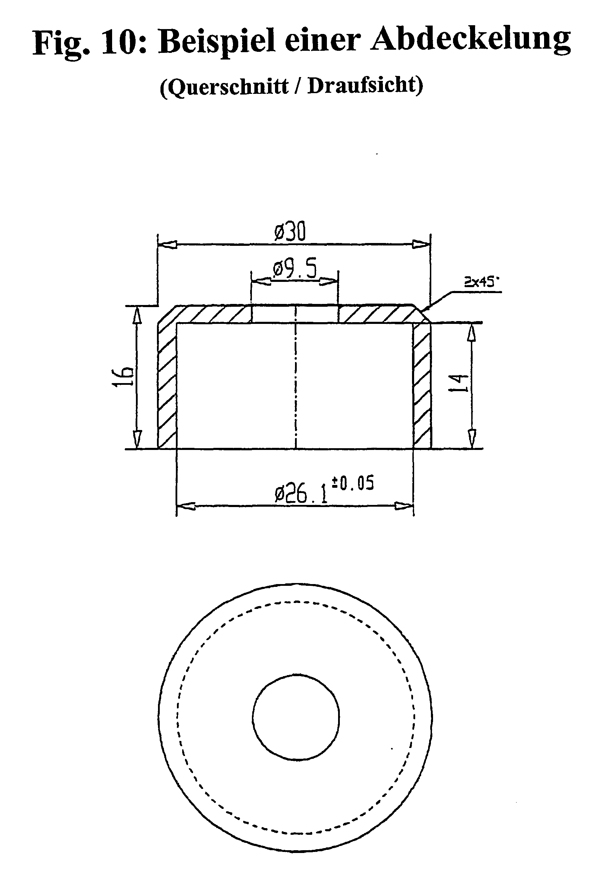

Damit steht fest, daß bei der Abgabe von überschüssig aufgenommenen Probenvolumen (Oversoak) in die Abfall-Station zusätzliche Spritzer entstehen können, die zu den beobachteten Verfärbungen Anlaß geben. Da der Oversoak für die zuverlässige und präzise Pipettierung von Proben in die Reaktionsgefäße unabdingbar ist, wurde eine Abdeckung entwickelt, wie sie in Fig. 10 dargestellt ist.

Die eingangs beschriebenen mit den Standard-Profileinstellungen und Enzygnost^{®} HBsAg beobachteten Kontaminationen in Plattenposition A lassen sich mit den Beschreibungen aus Modell B in der Zusammenfassung auf drei unterschiedliche Quellen von Spritzern zurückführen, die sich örtlich und ursächlich voneinander getrennt beschreiben und beheben lassen (Maßnahmen in Klammern):
- Spritzer durch den Pipettiervorgang von Proben (Optimierung der Dispense-Profile);
- Spritzer durch Nachlauf-/Abtropfeffekte des Pipettors (Optimierung der Aspirate-Profile) und
- Spritzer durch Abgabe von überschüssigem Probenvolumen (mechanische Abschirmung der Flüssigkeits-Abfall-Station, beispielsweise durch Abdeckelung).

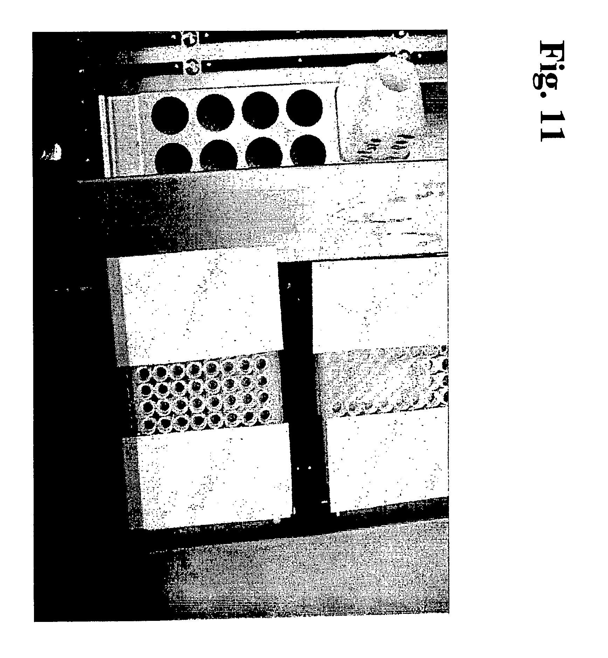

Es kann gezeigt werden, daß jede Maßnahme einzeln zur Verbesserung der Kontaminationseffekte beiträgt. Völlig reduziert werden die Effekte jedoch nur bei Realisierung aller Maßnahmen mit dem in Fig. 11 gezeigten resultierenden Bild in Modell A.

Verifizierbar ist die Wirksamkeit der beschriebenen Maßnahmen auch mit entsprechenden Resultaten bei Anwendung von Enzygnost^{®} HBsAg 5.0 (Tab. 16) und Enzygnost^{®} HIV Integral (Tab. 17), wobei die Platten der Tabellen auf Position A getestet wurden.

Die in der Tab. 18 in Strip 4 der Mikrotitrationsplatte sichtbaren Färbungen sind Ausdruck der eingangs beschriebenen spill-over-Effekte, die sehr selten auftreten können. Bei der stichpunktartigen Durchführung der in Beispiel 3 beschriebenen Anwendung von Modell B auf ELISA-Verfahren auf dem RSP 150^{®}, Firma Tecan (mit anschließender automatischer Prozessierung des Enzygnost^{®} HBsAg 5.0 mit dem BEP^{®} III, Firma Dade Behring) konnte gezeigt werden, daß dieser Probenverteiler den gleichen Effekt entfalten kann wie der BEP^{®} 2000 vor Implementierung der überraschend gemachten Beobachtungen (Tab. 19).

Darüber hinaus machen die unter gleichen Bedingungen mit Enzygnost^{®} HBsAg 5.0 erzielten Ergebnisse der Tab. 20 deutlich, daß wie auch immer erzeugte Kontaminationen auch mit diesem Pipettierautomaten als störend messbar sind, was bei dem BEP^{®} 2000 nach Ausführung des erfindungsgemäßen Verfahrens nicht mehr auftritt.

Damit konnte überraschenderweise auch gezeigt werden, daß in jüngster Zeit die Empfindlichkeit einzelner diagnostischer Nachweisverfahren derart gesteigert wurden, daß früher tolerierbare Kontaminationseffekte von Pipettierautomaten oder Probenverteiler-Modulen mit heutigen hochsensitiven Nachweisverfahren störende, wenn nicht sogar mißweisende Fehlinterpretationen verursachen können.

Über die beiden Enzygnost^{®} -Teste hinaus wurde auch bei weniger sensitiven Bestimmungsmethoden Beobachtungen von Kontaminationen gemacht, die allerdings sowohl der Frequenz als auch der Ausprägung nach weniger stark ausgeprägt sind: Enzygnost^{®} Anti-HBs, -Anti-HAV (Gesamt-Ig), und -Anti-HBe (Tab. 21, 22 und 23). Da es sich hierbei um Parameter handelt, bei denen dem Fachmann bekannt natürlicherweise sehr hohe Analytkonzentrationen auftreten können, liegt es nahe, daß hier bereits die dem Stand der Technik entsprechenden Grenzen nicht mehr für eine zuverlässige kontaminationsfreie Bestimmung ausreichen. Auch für diese Teste kann gezeigt werden, daß die Effekte mit der Gesamtheit der beschriebenen Maßnahmen beherrschbar sind.

Schließlich wird eine bisher nicht beschriebene Ursache für Kontaminationen in der Flüssigabfall-Station (FAS) identifiziert, die als zusätzliche Fehlerquelle fehlerhafte Ergebnisse erzeugen kann, die aber schnell und zuverlässig mechanisch abgestellt werden kann, beispielsweise durch Anbringung eines geeigneten Deckels mit einer darin befindlichen Öffnung zum Einbringen überschüssiger Probenvolumina (Flüssigabfälle).

Dementsprechend ist erfindungsgemäß ein Verfahren, worin die Flüssigabfall-Station (FAS) von einer oberen Abdeckelung abgedeckt wird und eine darin befindliche Öffnung möglichst klein dimensioniert ist, so daß einerseits optimaler Schutz vor Spritzern aus der Flüssigabfall-Station (FAS) bewirkt wird, jedoch andererseits die Abgabe von überschüssigem Probenvolumen durch diese Öffnung in die Flüssigabfall-Station (FAS) hinein reproduzierbar so möglich ist, daß dabei keine Flüssigkeit versehentlich mit dem Rand der Öffnung in Berührung kommt.

Alternativ kann die Flüssigabfall-Station (FAS) von vornherein so ausgestaltet sein, daß die obere Gefäßwandung der o.g. Abdeckelung entspricht, so daß eine separate Abdeckelung unter Beibehaltung ihrer Funktionalität entfallen kann.

Anstelle der oder zusätzlich zur beschriebenen Abdeckelung oder dementsprechenden Ausgestaltung der Flüssigabfall-Station ohne Abdeckelung kann auch eine Trennvorrichtung, beispielsweise eine Trennwand, zwischen der Flüsssigabfall-Station und dem Bereich der Reaktionsgefäße (beispielsweise Mikrotitrationsplatten) angebracht werden.

Die erfindungsgemäßen Maßnahmen der optimierten Profile sowie die mechanische Hardware-Ergänzung sind zwar an einer speziellen Ausführungsform einer Probenverteil-Station abgeleitet und damit direkt und unmittelbar auf baugleiche Apparate übertragbar.

Der Fachmann kann bei analog konzipierten Geräten diese Verfahren nutzen, auch wenn die diesbezüglich notwendigen Programmierungen abweichend vorgenommen werden müssen. So ist zu erwarten, daß andere Kenngrößen-Namen existieren, andere Maßeinheiten die Einstellungen definieren und/oder daß die Programmierung in anderen Software-Hirarchien vorgenommen werden oder werden müssen (beispielsweise Firmware, Steuerungs-Software oder sogar direkt in der Struktur der Betriebsssystems der Software in dedizierten PCs und/oder System-eigenen Software-Strukturen. In allen Fällen behält das erfindungsgemäße Verfahren seine Anwendbarkeit und kann in analogen, für den Fachmann naheliegenden Anpassungen an ein gegebenes System angewendet werden.

Besonders die Verfahren, die als Modelle A und B eine rasche Bestandsaufnahme und insbesondere Optimierung von bestehenden Kontaminationen erlauben, sind von einem Fachmann in vollem Umfang auch auf 4- oder 8-Kanal-Pipettoren sowohl mit Edelstahlnadeln als auch mit Wechselspitzen für entsprechende Umsetzungen und Modifikation verwendbar.

Der als Abdeckelung der Flüssigabfall-Station beschriebene Deckel kann modifiziet werden, beispielsweise indem man ihn entweder als Gesamtlösung der Flüssigabfall-Station realisiert (in Form eines Bauteiles) bzw. abweichend geometrisch/physikalisch konzipiert oder im Sinne des erfindungsgemäßen Verfahrens gänzlich anders realisiert, wie beispielsweise durch Anbringung einer Trennwand zwischen Flüssigabfall-Station und BMTP oder andere Konstruktionen zum Abschirmen und damit Verhindern der Kontaminationen.

Ebenso kann mit dem Wissen, daß von bisher nicht genügend berücksichtigten Arealen (beispielsweise Flüssigabfall-Station) ein erhebliches Störpotential verbunden ist auf weitere potentielle Störquellen (wie beispielsweise Pipetten-Abwurfstation) geschlossen werden.

Die vorliegende Erfindung wird nachfolgend auch durch die Beispiele und die Patentansprüche erläutert, ohne jedoch auf irgendwelche der genannten konkreten Ausführungsformen beschränkt zu sein.

### Beispiel 1: Modell A zum Nachweis von Kontaminationen von Probenverteilern

### POD-Stammlösung:

Meerettich-Peroxidase (POD) wird in einer Konzentration von 0,25 mg/ml in normalem Serum eines gesunden Blutspenders gelöst, um eine Matrix zum Pipettieren zu erzeugen, die dem natürlichen Probenmaterial hinsichtlich Viskosität und anderen physiko-chemischen Eigenschaften vergleichbar ist.

### Chromogen-Puffersubstrat-Lösung:

Es handelt sich hierbei um ein von der Firma Dade Behring kommerzialisiertes Produkt:
"Supplementary Reagents for Enzygnost^{®} /TMB", (Code # OUVP G17).

| | |
|---|---|
| Lösg. 1 | Chromogen TMB: |
| | 5 g Tetramethylbenzidin / L Wasser; |
| Lösg. 2 | Puffer/Substrat TMB: |
| | ca. 0,1 g Wasserstoffperoxid / L Natrium-Acetat-Puffer. |

1 ml Chromogen TMB werden mit 10 ml Puffer/Substrat TMB in einer im Testkit vorhandenen Kunststoff-Flasche gemischt.
Verwendbar ist diese Gebrauchslösung bis zu 5 Tagen unter lichtgeschützter Lagerung bei +2 bis +8 °C.

### Spitzen:

Leitfähige 300 µl- und 1100 µl- Wechselspitzen (Firma Eppendorff).

### Durchführung von Modell A:

Aus einer Plasikfolie (hier: Abklebefolien für Mikrotitrationsplatten aus o.g. Testkit) werden Teile der Größe von ca. 5x8 cm geschnitten und darauf Fliesspapier (beispielsweise Schleicher & Schüll) der gleichen zugeschnittenen Größe gelegt. Anschließend wird das Papier mit ca. 2 ml der Gebrauchslösung Chromogen-Puffersubstrat getränkt.

Jeweils 2 derartig vorbereiteter Papiere auf Plastikträger werden zur Abdeckung der Strips 1 bis 4 bzw. 9 bis 12 (siehe auch Fig. 4) einer unbeschichteten Mikrotitrationsplatte verwendet.

In die offenen Strips 5 bis 8 werden nun vom BEP^{®} 2000 - Pipettierautomat jeweils 100 µl der POD-Stammlösung pipettiert und das Ergebnis durch Fotografieren der Papiere nach 10 min. dokumentiert.

Stattfindende Kontaminationen stellen sich dar als blaue Punktverfärbungen, deren Durchmesser und Farbintensität dem Ausmaß der Kontaminationen direkt proportional sind.

Durch serielle Verdünnungen der POD-Stammlösung und Aufbringung definierter Volumina von den Verdünnungsstufen auf mit Chromogen-Puffersubstrat getränkte Fliespapiere konnte mit der 10-minütigen Inkubation eine Nachweisgrenze von kleiner als 2,5 ng POD/ml ermittelt werden, was einer Verdünnung von 1:10⁵ (und größer) entspricht.

### Beispiel 2 Modell B zum Nachweis von Kontaminationen

### Materialien:

Es werden ausnahmslos die Lösungen und Spitzen verwendet, die in Beispiel 1 beschrieben werden, während die Chromogen-Entwicklungszeit in diesem Modell zwecks Steigerung der Nachweisempfindlichkeit auf 30 min. festgelegt wurde. Zusätzlich benötigt wird die Stopplösung (0,5 N Schwefelsäure), mit der nach 30-minütiger Inkubation die Farbstoffbildung gestoppt wird, um die Farbintensität mit einem Photometer zu quantifizieren (Messung innerhalb einer Stunde nach Stoppen bei 450 nm Meßwellenlänge und 650 nm Referenzwellenlänge).

### Durchführung von Modell B:

3 unbeschichtete Mikrotitrationsplatten werden auf die in Fig. 3 definierten A-, B-, und C-Positionen plaziert.
Zunächst werden alle Kavitäten der Platten in A- und B-Position komplett mit jeweils 100 µl der Gebrauchlösung Chromogen-Puffersubstrat gefüllt wie auch die Strips 5 bis 12 der Platte in C-Position (siehe hierzu Fig. 3).
Dann werden vom Pipettierautomaten 100 µl der konzentrierten POD-Lösung nur in die Strips 1 bis 4 der Platte in A-Position pipettiert und alle Platten in die Raumtemperatur-Kammern des BEP^{®} 2000 gefahren.
Nach 30 min. wird die Reaktion durch Zugabe von 100 µl Sopplösung gestoppt und die Extinktion jedes Reaktionsgefässes (Näpfchen) jeder Platte photometrisch bestimmt.

Stattfindende Kontaminationen stellen sich dar als gelbe Verfärbungen in einzelnen Vertiefungen der betroffenen Mikrotitrationsplatten, deren Farbintensitäten der Stärke der Kontaminationen direkt proportional sind. Beispielhafte Ergebnisse sind in den Tab. 6, 7 und 8 dargestellt.

Die Nachweisgrenze der Methode wurde durch Pipettierung von je 10 µl von definierten seriellen Verdünnungen der POD-Stammlösung in jeweils 100 µl der Chromogen-Puffersubstrat-Lösung ermittelt.
Die nach Stoppen der Reaktion photometrisch gemessenen Extinktionen der einzelnen Konzentrationen sind im Vergleich zu background-Werten in der nachstehenden Tavbelle zusammengefaßt und führen zu einer Grenzempfindlichkeit von kleiner 25 pg POD/ml, was einer Verdünnung von 1: 10⁷ entspricht.

**Tabelle 24: Extinktionen verschiedener POD-Konzentrationen in Modell B**

| Konzentration: ng POD/ml | Extinktion 450nm (O.D.) | Entsprechend einer Verdünnung der Stamm-Lösg. |
|---|---|---|
| 2,5 | overflow | 10⁵ |
| 0,25 | 1,780 | 10⁶ |
| 0,025 | 0,180 | 10⁷ |
| 0,0025 | 0,080 | 10⁸ |
| | | |
| Background (Mittelwert aus n=20 Einzelmessungen) | 0,020 | Negativ |

### Variationen von Modell B:

Dabei werden nicht 3 Platten positioniert sondern nur eine einzige in A-Position, deren Belegungs-/Pipettierschema der Platte C in Modell B entspricht. Die Abarbeitung insgesamt enspricht der oben gemachten Beschreibung.

Je nach Fragestellung können auch 4 Platten auf allen Plattenpositionen mit unterschiedlichster Plazierung der Auftragung von Enzymlösung untersucht werden.

### Beispiel 3: Anwendung von Modell B auf Enzygnost^{®} -Tests:

Dabei werden ca. 20-30, den zu bestimmenden Analyten in hoher Konzentration enthaltende Seren in die ersten 3 Strips sowie ca. 70 analytfreie Seren auf die verbleibenden Näpfchen der Mikrotitrationsplatten der Enzygnost^{®} - Teste aufgetragen.

Entweder die Platte wird auf Position A positioniert (Variation des Modells B) oder auf Position C, wenn zusätzlich ausschließlich mit analytfreien Seren bestückte Mikrotitrationsplatten auf der A- und B-Position plaziert sind.

Die weitere Prozessierung der Platten wird je nach Test gemäß den in den entsprechenden Packungsbeilagen der Enzygnost^{®} - Teste beschriebenen Verfahren vollautomatisch vom BEP^{®} 2000 vorgenommen.

Zusätzlich werden Vergleichstestungen mit den identischen Plattenbelegungen vorgenommen, wobei die Proben manuell pipettiert und die ELISA-Durchführung mit dem BEP III^{®} parallel durchgeführt wird. Damit können Proben identifiziert werden, die von Natur aus (Matrix-bedingt) höhere O.D. Werte generieren, die nicht auf Kontaminationen zurückzuführen sind.

Beispielhafte Ergebnisse von der Anwendung des Auftragsschemas auf Enzygnost^{®} -Tests finden sich für HBsAg in den Tab. 1 (vor Anwendung der erfindungsgemäßen Verfahren) und Tab. 16 (nach Implementierung der Erfindungen).

**Tab.1: Enzygnost HIV Integral**

| Testung v. 30 pos. Proben in Position E1-B5, 58 neg. Proben in Position C5-D12 Negative Kontrolle in Position A1-C1, positive Kontrolle in Position D1 u. E12-H12 Cut-Off = 500 mE (0,5 OD) | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | **751** | 3000 | 3000 | 3000 | 3000 | 28 | 130 | **3000** | 31 | 29 | 62 | 26 |
| | **B** | 49 | 3000 | 3000 | 3000 | 3000 | 46 | 33 | 39 | 41 | 25 | 40 | 27 |
| | **C** | 269 | 3000 | 3000 | 3000 | 47 | 40 | 42 | 32 | 33 | 37 | 33 | 28 |
| | **D** | 1485 | 3000 | 3000 | 3000 | 46 | 36 | 29 | 31 | 31 | 28 | 25 | 44 |
| | **E** | 3000 | 3000 | 3000 | 3000 | 33 | 60 | 41 | 41 | 48 | 185 | 25 | 1045 |
| | **F** | 3000 | 3000 | 3000 | 3000 | **1366** | 222 | **1164** | 34 | 32 | 38 | 27 | 988 |
| | **G** | 3000 | 3000 | 3000 | 3000 | 33 | 103 | 157 | 40 | 37 | 33 | 30 | 1078 |
| | **H** | 3000 | 3000 | 3000 | 3000 | 37 | 36 | 93 | 31 | 30 | 59 | 40 | 993 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 2: Enzygnost HBsAg 5.0**

| Testung v. 20 pos. Proben in Position E1-H3, 71 neg. Proben in Position A4-G12 Negative Kontrolle in Position A1-C1, positive Kontrolle in Position D1 u. H12 Cut-Off = 85 mE entsprechend = 0,085 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 33 | 3000 | 3000 | 20 | 24 | 24 | 16 | 19 | 19 | 26 | 23 | 24 |
| | **B** | 34 | 3000 | 3000 | 15 | 20 | 15 | 51 | 21 | 17 | 22 | 26 | 26 |
| | **C** | 38 | 3000 | 3000 | 77 | 22 | 14 | 16 | 13 | 17 | 17 | **3000** | 26 |
| | **D** | 1802 | 3000 | 3000 | 20 | 21 | 17 | 15 | 21 | 15 | 44 | 24 | 40 |
| | **E** | 3000 | 3000 | 3000 | 18 | 17 | 24 | 16 | 24 | **268** | 21 | 22 | 58 |
| | **F** | 3000 | 3000 | 3000 | 21 | 18 | 21 | 18 | 20 | 19 | 18 | 21 | 41 |
| | **G** | 3000 | 3000 | 3000 | 50 | 16 | **720** | 21 | 17 | 27 | 25 | 21 | 26 |
| | **H** | 3000 | 3000 | 3000 | 13 | 17 | 17 | 21 | **258** | **207** | **3000** | 20 | 1565 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 3: Enzygnost Toxoplasmosis IgG**

| Testung v. 21 pos. Proben in Position D1-H3, 71 neg. Proben in Position A4-G12 Negative Kontrolle in Position A1-B1, positive Kontrolle in Position C1 u. H12 Cut-Off = 100 mE entsprechend = 0,1 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 20 | 1515 | 2225 | 70 | 27 | 67 | 35 | 57 | 29 | 67 | 41 | 25 |
| | **B** | 27 | 1977 | 1393 | 23 | 35 | 54 | 44 | 28 | 51 | 44 | 35 | 53 |
| | **C** | 1603 | 1719 | 2514 | 31 | 43 | 27 | 36 | 31 | 30 | 39 | 29 | 33 |
| | **D** | 2119 | 2389 | 1925 | 50 | 69 | 31 | 42 | 65 | 49 | 59 | 28 | 47 |
| | **E** | 1629 | 2292 | 1865 | 27 | 29 | 49 | 51 | 26 | 53 | 29 | 52 | 38 |
| | **F** | 1266 | 2112 | 1896 | 35 | 46 | 45 | 43 | 46 | 57 | 36 | 48 | 62 |
| | **G** | 1958 | 2367 | 1476 | 28 | 58 | 28 | 54 | 39 | 32 | 33 | 43 | 28 |
| | **H** | 2091 | 2115 | 1993 | 40 | 53 | 25 | 56 | 70 | 29 | 41 | 41 | 1753 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 4: Enzygnost Anti-Rubella-Virus/IgG**

| Testung v. 15 pos. Proben in Position B1-H4, 31 neg. Proben in Position A5-G12 Positive Kontrolle in Position A1/A2 u. H11/H12 Cut-Off = 100 mE entsprechend = 0,1 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | | 1355 | | 1440 | | 4 | | 2 | | 1 | | 5 |
| | **B** | | 2629 | | 1129 | | 2 | | 4 | | 9 | | 12 |
| | **C** | | 2322 | | 2189 | | 5 | | 11 | | 5 | | 9 |
| | **D** | | 1910 | | 1426 | | 2 | | 3 | | 7 | | 4 |
| | **E** | | 1470 | | 1443 | | 10 | | 2 | | 8 | | 10 |
| | **F** | | 1197 | | 2032 | | 5 | | 1 | | 5 | | 3 |
| | **G** | | 953 | | 1743 | | 6 | | 5 | | 4 | | 1 |
| | **H** | | 646 | | 1977 | | 5 | | 4 | | 3 | | 1223 |

| | | | | | | | | | | | | | |
|---|---|---|---|---|---|---|---|---|---|---|---|---|---|
| Werte stellen Differenz-Extinktionen in mE zwischen spezifischem Signal (Antigenbeschichtung der Reihen 1, 3, 5, 7, 9 u. 11) und unspezifischem Signal (Kontrollantigen der Reihen 2, 4, 6, 8, 10 u. 12) dar. | | | | | | | | | | | | | |

**Tab. 5: Enzygnost Anti-HSV/IgG**

| Testung v. 15 pos. Proben in Position B1-H4, 31 neg. Proben in Position A5-G12 Positive Kontrolle in Position A1/A2 und H11/H12 Cut-Off = 100 mE entsprechend = 0,1 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | | 1541 | | 1440 | | 50 | | 24 | | 32 | | 32 |
| | **B** | | 2239 | | 1359 | | 45 | | 11 | | 33 | | 19 |
| | **C** | | 1833 | | 782 | | 40 | | 26 | | 26 | | 23 |
| | **D** | | 1791 | | 1921 | | 46 | | 33 | | 27 | | 31 |
| | **E** | | 1089 | | 1533 | | 49 | | 41 | | 33 | | 36 |
| | **F** | | 1204 | | 1171 | | 33 | | 39 | | 19 | | 29 |
| | **G** | | 1089 | | 1714 | | 29 | | 35 | | 28 | | 35 |
| | **H** | | 1791 | | 1519 | | 42 | | 28 | | 17 | | 1405 |

| | | | | | | | | | | | | | |
|---|---|---|---|---|---|---|---|---|---|---|---|---|---|
| Werte stellen Differenz-Extinktionen in mE zwischen spezifischem Signal (Antigenbeschichtung der Reihen 1, 3, 5, 7, 9 u. 11) und unspezifischem Signal (Kontrollantigen der Reihen 2, 4, 6, 8, 10 u. 12) dar. | | | | | | | | | | | | | |

**Tab. 6: Modell B gemäß Beispiel 2**

| Platte befand sich in Position C der Abb. 3 | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 96 | 96 | 93 | 96 | 10 | 10 | 10 | 10 | 10 | 10 | 10 | 11 |
| | **B** | 97 | 96 | 96 | 98 | 10 | 10 | 10 | 9 | 10 | 10 | 10 | 10 |
| | **C** | 98 | 98 | 96 | 97 | 10 | 10 | 10 | 10 | 10 | 10 | 10 | 10 |
| | **D** | 94 | 97 | 94 | 109 | 10 | 10 | 10 | 11 | 10 | 10 | 10 | 10 |
| | **E** | 93 | 93 | 103 | 93 | 9 | 37 | 17 | 12 | 10 | 10 | 10 | 10 |
| | **F** | 95 | 98 | 98 | 97 | 10 | **266** | 19 | 10 | 10 | 10 | 9 | 9 |
| | **G** | 98 | 95 | 99 | 98 | 10 | **309** | 11 | 10 | 10 | 10 | 10 | 10 |
| | **H** | 94 | 99 | 95 | 97 | **1389** | **2039** | 11 | 11 | 10 | 11 | 11 | 11 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 7: Modell B gemäß Beispiel 2**

| Platte befand sich in Position B der Abb. 3 | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 15 | 15 | **2886** | 15 | 14 | **1005** | 14 | 15 | 15 | 17 | 15 | 15 |
| | **B** | 15 | 15 | 15 | 15 | **1179** | 15 | 18 | **2763** | 14 | 14 | 14 | 15 |
| | **C** | 15 | 15 | 15 | 17 | 14 | **1782** | 15 | 15 | 15 | **3000** | 15 | 15 |
| | **D** | 15 | 14 | 14 | 15 | 14 | 14 | 14 | 14 | 15 | 14 | 14 | 13 |
| | **E** | 14 | 14 | 14 | 15 | 18 | 14 | 14 | 13 | 18 | 14 | 14 | 16 |
| | **F** | 15 | 14 | 15 | 14 | 21 | 15 | 14 | 14 | 17 | 16 | 16 | 16 |
| | **G** | 15 | 15 | 14 | 14 | **3000** | 15 | 15 | 18 | 17 | 17 | 14 | 17 |
| | **H** | 16 | 15 | 15 | 15 | 20 | 15 | 15 | 14 | 17 | 18 | 14 | 17 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 8: Modell B gemäß Beispiel 2**

| Platte befand sich in Position A der Abb. 3 | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 14 | 13 | 14 | 14 | 14 | 13 | 15 | 15 | 14 | 13 | 13 | 14 |
| | **B** | 15 | 14 | 15 | 14 | 15 | 15 | 13 | 15 | 14 | 14 | 14 | 34 |
| | **C** | 15 | 14 | 14 | 14 | 14 | 14 | 13 | 14 | 14 | 14 | 14 | 14 |
| | **D** | 13 | 13 | 14 | 15 | 14 | 28 | 13 | 13 | 30 | 13 | 12 | 36 |
| | **E** | 13 | 14 | 14 | 13 | 14 | 14 | 19 | 14 | 14 | 17 | **125** | 14 |
| | **F** | 14 | 13 | 13 | 13 | 13 | 33 | 33 | 23 | 18 | 18 | **535** | 19 |
| | **G** | 14 | 14 | 14 | 13 | 13 | 22 | 13 | 30 | 18 | 17 | **547** | 23 |
| | **H** | 15 | 14 | 19 | 14 | 13 | 14 | 27 | 38 | 37 | 35 | **343** | 21 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 9:**

| **Modell B gemäß Beispiel 2 unter optimierten Dispensierprofilen der** **Abb. 7** | | | | | | | | | | | | | |
|---|---|---|---|---|---|---|---|---|---|---|---|---|---|
| Platte befand sich in Position C der Abb. 3 | | | | | | | | | | | | | |
| | | Steifen: | | | | | | | | | | | |
| | | **1** | **2** | **3** | **4** | **5** | **6** | **7** | **8** | **9** | **10** | **11** | **12** |
| Reihe: | **A** | 98 | 97 | 98 | 98 | 11 | 12 | 12 | 11 | 11 | 11 | 12 | 12 |
| | **B** | 99 | 99 | 99 | 99 | 11 | 11 | 12 | 12 | 12 | 11 | 11 | 11 |
| | **C** | 101 | 97 | 97 | 104 | 11 | 11 | 11 | 11 | 11 | 11 | 11 | 11 |
| | **D** | 107 | 99 | 99 | 99 | 11 | 11 | 11 | 11 | 11 | 11 | 11 | 11 |
| | **E** | 99 | 98 | 98 | 98 | 11 | 10 | 11 | 11 | 10 | 11 | 11 | 11 |
| | **F** | 97 | 98 | 98 | 97 | 11 | 11 | 11 | 11 | 12 | 11 | 11 | 11 |
| | **G** | 98 | 98 | 98 | 97 | 11 | 11 | 11 | 11 | 11 | 11 | 11 | 11 |
| | **H** | 98 | 98 | 98 | 98 | 11 | 12 | 12 | 12 | 12 | 12 | 12 | 12 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 10:**

| **Modell B gemäß Beispiel 2 unter optimierten Dispensierprofilen der** **Abb. 7** | | | | | | | | | | | | | |
|---|---|---|---|---|---|---|---|---|---|---|---|---|---|
| Platte befand sich in Position B der Abb. 3 | | | | | | | | | | | | | |
| | | Streifen: | | | | | | | | | | | |
| | | **1** | **2** | **3** | **4** | **5** | **6** | **7** | **8** | **9** | **10** | **11** | **12** |
| Reihe: | **A** | 16 | 17 | 16 | 16 | 16 | 16 | 17 | 17 | 17 | 16 | 16 | 16 |
| | **B** | 17 | 17 | 18 | 16 | 16 | 17 | 17 | 17 | 17 | 17 | 17 | 17 |
| | **C** | 15 | 17 | 17 | 16 | 16 | 16 | 16 | 15 | 17 | 17 | 16 | 16 |
| | **D** | 16 | 16 | 16 | 15 | 16 | 16 | 16 | 16 | 16 | 16 | 15 | 16 |
| | **E** | 16 | 15 | 15 | 14 | 15 | 16 | 16 | 18 | 17 | 16 | 15 | 15 |
| | **F** | 12 | 12 | 12 | 12 | 14 | 12 | 12 | 12 | 15 | 12 | 12 | 12 |
| | **G** | 16 | 15 | 16 | 15 | 15 | 16 | 16 | 16 | 19 | 17 | 16 | 16 |
| | **H** | 17 | 17 | 16 | 16 | 16 | 16 | 16 | 16 | 20 | **958** | 17 | 16 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 11:**

| **Modell B gemäß Beispiel 2 unter optimierten Dispensierprofilen der** **Abb. 7** | | | | | | | | | | | | | |
|---|---|---|---|---|---|---|---|---|---|---|---|---|---|
| Platte befand sich in Position A der Abb. 3 | | | | | | | | | | | | | |
| | | Streifen: | | | | | | | | | | | |
| | | **1** | **2** | **3** | **4** | **5** | **6** | **7** | **8** | **9** | **10** | **11** | **12** |
| Reihe: | **A** | 17 | 18 | 17 | 17 | 17 | 17 | 17 | 17 | 16 | 16 | 17 | 16 |
| | **B** | 17 | 17 | 17 | 17 | 17 | 16 | 16 | 18 | 17 | 16 | 17 | 16 |
| | **C** | 16 | 16 | 16 | 16 | 17 | 16 | 16 | 15 | 16 | 16 | 16 | 16 |
| | **D** | 16 | 16 | 16 | 16 | 17 | 16 | 16 | 16 | 16 | **3000** | 18 | 17 |
| | **E** | 16 | 15 | 16 | 16 | 15 | 15 | 83 | 16 | 15 | 15 | 15 | 18 |
| | **F** | 15 | 15 | 16 | 15 | 15 | 16 | 48 | 16 | **3000** | 16 | 19 | 14 |
| | **G** | 16 | 15 | 16 | 15 | 15 | 15 | 29 | 15 | 65 | **423** | 21 | 14 |
| | **H** | 16 | 16 | 15 | **1443** | 16 | 16 | 31 | **2220** | **1015** | 14 | 20 | 16 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 12: Modell B gemäß Beispiel 2 (nach Optimierung der Aspirate- und Dispensier-Profile)**

| Platte befand sich in Position B der Abb. 3 | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 36 | 37 | 37 | 36 | 35 | 35 | 35 | 35 | 35 | 35 | 37 | 35 |
| | **B** | 35 | 35 | 34 | 35 | 35 | 34 | 35 | 49 | 35 | 35 | 34 | 35 |
| | **C** | 36 | 34 | 36 | 36 | 35 | 35 | 35 | 35 | 34 | 35 | 36 | 35 |
| | **D** | 34 | 35 | 36 | 34 | 35 | 34 | 35 | 34 | 36 | 34 | 34 | 34 |
| | **E** | 33 | 34 | 35 | 35 | 34 | 34 | 35 | 34 | 32 | 34 | 33 | 34 |
| | **F** | 32 | 34 | 34 | 35 | 33 | 33 | 36 | 34 | 33 | 53 | 35 | 34 |
| | **G** | 33 | 33 | 34 | 34 | 34 | 34 | 36 | 35 | 35 | 34 | 33 | 35 |
| | **H** | 33 | 35 | 35 | 34 | 34 | 34 | 37 | 33 | 34 | 34 | 35 | 35 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 13: Modell B gemäß Beispiel 2**

| Platte befand sich in Position A der Abb. 3 | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 8 | 7 | 7 | 7 | 4 | 4 | 8 | 6 | 7 | 7 | 7 | **599** |
| | **B** | 7 | 8 | 7 | 8 | 8 | 7 | 8 | 11 | 9 | 7 | 8 | 7 |
| | **C** | 7 | 7 | 7 | 7 | 7 | 7 | 8 | 7 | 7 | 7 | **1052** | 7 |
| | **D** | 8 | 8 | 7 | 7 | 7 | 7 | 8 | 8 | 8 | 7 | **1074** | 7 |
| | **E** | 8 | 7 | 9 | 7 | 7 | 32 | **180** | 7 | 8 | **118** | 49 | 7 |
| | **F** | 7 | 7 | 20 | 7 | 7 | 93 | **185** | 6 | 7 | **122** | **104** | 8 |
| | **G** | 9 | 8 | 32 | 7 | 7 | **165** | 77 | 8 | 7 | 54 | **151** | 8 |
| | **H** | 0 | 6 | 55 | 7 | 5 | **142** | 72 | **687** | 6 | **596** | **297** | 8 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 14: Modell B gemäß Beispiel 2**

| Platte befand sich in Position B der Abb. 3 | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 8 | 9 | 8 | 8 | 7 | 8 | 9 | 8 | 7 | 7 | 7 | 8 |
| | **B** | 8 | 7 | 9 | 8 | 9 | 8 | 11 | 8 | 8 | 10 | 9 | 8 |
| | **C** | 8 | 8 | 8 | 8 | 8 | 8 | 8 | 8 | 7 | 8 | 7 | 7 |
| | **D** | 9 | 8 | 8 | 8 | 8 | 8 | 8 | 8 | 8 | 8 | 8 | 8 |
| | **E** | 8 | 8 | 8 | 8 | 8 | 7 | 7 | 8 | 8 | 8 | 8 | 8 |
| | **F** | 8 | 8 | 8 | 8 | 8 | 8 | 7 | 8 | 8 | 8 | 8 | 8 |
| | **G** | 13 | 8 | 8 | 8 | 8 | 8 | 8 | 8 | 8 | 8 | 8 | 7 |
| | **H** | 6 | 8 | 8 | 8 | 7 | 8 | 8 | 8 | 8 | 8 | 8 | 8 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 15: Modell B gemäß Beispiel 2**

| Platte befand sich in Position C der Abb. 3 | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 101 | 103 | 103 | 102 | 7 | 7 | 8 | 7 | 6 | 7 | 7 | 8 |
| | **B** | 104 | 102 | 102 | 105 | 8 | 7 | 7 | 8 | 7 | 8 | 8 | 8 |
| | **C** | 103 | 103 | 102 | 103 | 7 | 6 | 7 | 7 | 7 | 7 | 7 | 7 |
| | **D** | 102 | 104 | 104 | 103 | 7 | 7 | 6 | 7 | 7 | 7 | 7 | 7 |
| | **E** | 102 | 102 | 103 | 103 | 7 | 6 | 7 | 7 | 6 | 7 | 15 | 22 |
| | **F** | 102 | 102 | 102 | 104 | 6 | 6 | 5 | 6 | 6 | 6 | 41 | 30 |
| | **G** | 102 | 103 | 102 | 103 | 7 | 7 | 7 | 7 | 7 | 7 | 33 | 22 |
| | **H** | 101 | 104 | 103 | 103 | 7 | 6 | 6 | 7 | 7 | 7 | 29 | 18 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 16: Enzygnost HBsAg 5.0 (Platte in Pos. A unter optimierten Pipettorprofilen sowie Abdeckung der FAS)**

| Testung v. 20 pos. Proben in Position E1-H3, 71 neg. Proben in Position A4-G12 Negative Kontrolle in Position A1-C1, positive Kontrolle in Position D1 u. H12 Cut-Off = 87 mE entsprechend = 0,087 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 57 | 1111 | 1120 | 21 | 25 | 29 | 23 | 34 | 25 | 20 | 29 | 38 |
| | **B** | 57 | 2826 | 959 | 29 | 24 | 34 | 22 | 36 | 32 | 28 | 30 | 35 |
| | **C** | 55 | 2630 | 2968 | 24 | 29 | 24 | 31 | 24 | 17 | 25 | 27 | 39 |
| | **D** | 1398 | 3000 | 3000 | 27 | 27 | 22 | 48 | 26 | 27 | 22 | 31 | 58 |
| | **E** | 3000 | 3000 | 3000 | 28 | 21 | 24 | 23 | 33 | 23 | 17 | 31 | 28 |
| | **F** | 3000 | 3000 | 3000 | 23 | 24 | 28 | 47 | 33 | 29 | 23 | 38 | 29 |
| | **G** | 3000 | 3000 | 3000 | 22 | 25 | 31 | 24 | 43 | 22 | 57 | 40 | 30 |
| | **H** | 2800 | 2012 | 3000 | 22 | 29 | 28 | 29 | 29 | 31 | 19 | 26 | 1063 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 17: Enzygnost HIV Integral (Platte in Pos. A unter optimierten Pipettorprofilen sowie Abdeckung der FAS)**

| Testung v. 30 pos. Proben in Position E1-H3 und E6 - F7, 61 neg. Proben in Position A4-D6 u. G7-G12 Negative Kontrolle in Position A1-C1, positive Kontrolle in Position D1 u. H12 Cut-Off = 510 mE entsprechend = 0,5 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 60 | 2857 | 2863 | 34 | 31 | 38 | 2906 | 34 | 38 | 33 | 33 | 38 |
| | **B** | 62 | 2945 | 2958 | 47 | 38 | 36 | 2983 | 39 | 33 | 36 | 39 | 33 |
| | **C** | 60 | 3000 | 3000 | 36 | 34 | 53 | 3000 | 38 | 43 | 29 | 49 | 39 |
| | **D** | 1877 | 3000 | 3000 | 458 | 34 | 50 | 3000 | 30 | 28 | 33 | 44 | 31 |
| | **E** | 3000 | 3000 | 3000 | 44 | 37 | 3000 | 3000 | 32 | 41 | 37 | 28 | 36 |
| | **F** | 3000 | 3000 | 3000 | 37 | 30 | 3000 | 3000 | 29 | 44 | 27 | 27 | 30 |
| | **G** | 3000 | 3000 | 3000 | 41 | 38 | 3000 | 41 | 30 | 79 | 32 | 30 | 29 |
| | **H** | 3000 | 3000 | 3000 | 32 | 49 | 3000 | 27 | 33 | 34 | 27 | 30 | 1091 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 18: Enzygnost HBsAg 5.0 (Position A)**

| Testung v. 20 pos. Proben in Position E1-H3, 71 neg. Proben in Position A4-G12 Negative Kontrolle in Position A1-C1, positive Kontrolle in Position D1 u. H12 Cut-Off = 105 mE entsprechend = 0,105 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 59 | 2877 | 2855 | 76 | 68 | 68 | 69 | 62 | 62 | 71 | 64 | 62 |
| | **B** | 57 | 2936 | 2946 | 82 | 69 | 71 | 74 | 82 | 69 | 71 | 70 | 81 |
| | **C** | 49 | 3000 | 3000 | 77 | 73 | 69 | 70 | 67 | 65 | 77 | 67 | 67 |
| | **D** | 2954 | 3000 | 3000 | 68 | 70 | 75 | 69 | 70 | 67 | 68 | 77 | 72 |
| | **E** | 3000 | 3000 | 3000 | 74 | 89 | 68 | 71 | 68 | 77 | 73 | 74 | 73 |
| | **F** | 3000 | 3000 | 3000 | 77 | 74 | 70 | 78 | 71 | 72 | 71 | 70 | 74 |
| | **G** | 3000 | 3000 | 3000 | 127 | 68 | 68 | 73 | 70 | 71 | 75 | 69 | 78 |
| | **H** | 3000 | 3000 | 3000 | 62 | 60 | 57 | 57 | 68 | 69 | 67 | 66 | 969 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 19: Enzygnost HBsAg 5.0 (Probenverteilung mit RSP 150 der Firma Tecan)**

| Testung v. 18 pos. Proben in Position E1-H3, 71 neg. Proben in Position A4-G12 Negative Kontrolle in Position A1-C1, positive Kontrolle in Position D1 u. H12 Cut-Off = 96 mE entsprechend = 0,096 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 43 | leer | 2380 | 16 | 23 | 20 | 21 | 17 | 28 | 18 | 22 | 21 |
| | **B** | 33 | 3000 | 3000 | 40 | 25 | 33 | 22 | 21 | 17 | 18 | 16 | 19 |
| | **C** | 62 | 2367 | 3000 | **203** | 25 | 19 | 27 | 16 | 18 | 21 | 15 | 19 |
| | **D** | 1758 | 3000 | 3000 | 21 | 24 | 22 | 16 | 22 | 20 | 16 | 20 | 21 |
| | **E** | 3000 | 3000 | 3000 | 22 | 22 | 25 | 38 | 24 | 20 | 19 | 20 | 23 |
| | **F** | 3000 | 3000 | 3000 | **460** | 26 | 28 | 23 | 32 | 22 | 23 | 21 | 22 |
| | **G** | 3000 | 3000 | 3000 | **1264** | 24 | 29 | 22 | 25 | 25 | 30 | 26 | 28 |
| | **H** | leer | 3000 | 3000 | 29 | 30 | 25 | 28 | 23 | 25 | 27 | 24 | 1535 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 20: Enzygnost HBsAg 5.0 (Probenverteilung mit RSP 150 der Firma Tecan)**

| Testung v. 18 pos. Proben in Position E1-H3, 71 neg. Proben in Position A4-G12 Negative Kontrolle in Position A1 u. C1, positive Kontrolle in Position D1 u. H12 Cut-Off = 80 mE entsprechend = 0,080 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 32 | leer | 2387 | 15 | 25 | 18 | 20 | 16 | 24 | 16 | 25 | 21 |
| | **B** | leer | 3000 | 2633 | 58 | 17 | 20 | 19 | 17 | 15 | 18 | 18 | 18 |
| | **C** | 27 | 2586 | 3000 | 18 | 25 | 18 | 24 | 19 | 16 | 18 | 15 | 22 |
| | **D** | 1693 | 3000 | 3000 | 19 | 24 | 22 | 17 | 24 | 19 | 15 | 23 | 21 |
| | **E** | 3000 | 3000 | 3000 | 22 | 21 | 22 | 43 | 23 | 20 | 19 | 22 | 24 |
| | **F** | 3000 | 3000 | 3000 | 28 | 26 | 25 | 23 | 33 | 18 | 24 | 22 | 25 |
| | **G** | 3000 | 3000 | 3000 | 30 | 24 | 26 | **250** | 26 | 23 | 25 | 26 | 34 |
| | **H** | leer | 2943 | 3000 | 28 | 30 | 22 | 25 | 24 | 20 | 28 | 27 | 1717 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 21: Enzygnost Anti-HBs II**

| Testung v. 20 pos. Proben in Position F1-A4, 70 neg. Proben in Position B4-G12 Negative Kontrolle in Position A1-D1, positive Kontrolle in Position E1 u. H12 Cut-Off = 136 mE entsprechend = 0,136 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 58 | 3000 | 3000 | 3000 | 74 | 53 | 77 | 45 | 76 | 67 | 50 | 68 |
| | **B** | 57 | 3000 | 3000 | 58 | 53 | 56 | 64 | 67 | 64 | 86 | 98 | 100 |
| | **C** | 52 | 3000 | 3000 | 62 | 57 | 87 | 99 | 92 | 55 | 79 | 62 | 85 |
| | **D** | 62 | 3000 | 3000 | 81 | 89 | 63 | 72 | 81 | 61 | 51 | 73 | 71 |
| | **E** | 1346 | 3000 | 3000 | 56 | 87 | 50 | 100 | 49 | 99 | 66 | 68 | 57 |
| | **F** | 3000 | 3000 | 3000 | 72 | 69 | 91 | 68 | 56 | 49 | 73 | 59 | 66 |
| | **G** | 3000 | 3000 | 3000 | 90 | 91 | 57 | 59 | 64 | 66 | 48 | 51 | 63 |
| | **H** | 3000 | 3000 | 3000 | 81 | 61 | 53 | 97 | 71 | 58 | 66 | 67 | 1173 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 22: Enzygnost Anti-HAV (Testprinzip: Kompetition)**

| Testung v. 20 pos. Proben in Position F1-A4, 70 neg. Proben in Position B4-G12 Negative Kontrolle in Position A1-D1, positive Kontrolle in Position E1 u. H12 Cut-Off = 672 mE entsprechend = 0,672 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 1481 | 34 | 50 | 31 | 1252 | 1514 | 1422 | 1340 | 1256 | 1465 | 1424 | 1387 |
| | **B** | 1243 | 31 | 27 | 1476 | 1468 | 1355 | 1387 | 1388 | 1434 | 1422 | 1228 | 1439 |
| | **C** | 1304 | 47 | 157 | 1501 | 1384 | 1333 | 1452 | 1245 | 1366 | 1345 | 1615 | 1313 |
| | **D** | 1354 | 29 | 99 | 1210 | 1131 | 1185 | 1374 | 1392 | 1472 | 1266 | 1532 | 1298 |
| | **E** | 177 | 27 | 128 | 1439 | 1423 | 1381 | 1123 | 1102 | 1368 | 1421 | 1557 | 1401 |
| | **F** | 40 | 27 | 53 | 1435 | 1355 | 1395 | 1513 | 1327 | 1525 | 1555 | 1477 | 1523 |
| | **G** | 34 | 47 | 28 | 1454 | 1135 | 1253 | 1405 | 1268 | 1398 | 1199 | 1456 | 1333 |
| | **H** | 98 | 25 | 29 | 1414 | 1293 | 1361 | 1360 | 1250 | 1436 | 1367 | 1399 | 159 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

**Tab. 23: Enzygnost HBe monoclonal (Testprinzip: Kompetition)**

| Testung v. 26 pos. Proben in Position F1-G4, 64 neg. Proben in Position H4-G12 Negative Kontrolle befindet sich auf Position A1-D1, positive Kontrolle in Position E1 u. H12 Cut-Off = 902 mE entsprechend = 0,902 OD | | | | | | | | | | | | | |
|---|---|---|---|---|---|---|---|---|---|---|---|---|---|
| | | Streifen: | | | | | | | | | | | |
| | | **1** | **2** | **3** | **4** | **5** | **6** | **7** | **8** | **9** | **10** | **11** | **12** |
| Reihe: | **A** | 1867 | 13 | 17 | 15 | 1672 | 1670 | 1689 | 1651 | 1626 | 1605 | 1606 | 1628 |
| | **B** | 1851 | 13 | 15 | 13 | 1628 | 1701 | 1717 | 1649 | 1634 | 1632 | 1568 | 1666 |
| | **C** | 1713 | 12 | 14 | 14 | 1701 | 1649 | 1633 | 1653 | 1602 | 1619 | 1650 | 1687 |
| | **D** | 1792 | 14 | 21 | 408 | 1688 | 1770 | 1700 | 1657 | 1564 | 1618 | 1639 | 1671 |
| | **E** | 17 | 17 | 14 | 14 | 1655 | 1650 | 1740 | 1570 | 1679 | 1521 | 1567 | 1639 |
| | **F** | 14 | 23 | 15 | 15 | 1622 | 1615 | 1648 | 1666 | 1555 | 1685 | 1608 | 1694 |
| | **G** | 22 | 22 | 21 | 17 | 1317 | 1715 | 1607 | 1645 | 1538 | 1544 | 1592 | 1616 |
| | **H** | 18 | 15 | 16 | 1639 | 1684 | 1691 | 1674 | 1533 | 1578 | 1667 | 1710 | 18 |

| | | | | | | | | | | | | | |
|---|---|---|---|---|---|---|---|---|---|---|---|---|---|
| Werte stellen Extinktionen in mE dar, wie sie bei der Meßwellenlänge 450 gemessen wurden | | | | | | | | | | | | | |

## Patentansprüche

1. Verfahren zur Reduzierung der Kontamination von leeren oder bereits mit anslytfreiem oder in geringer Konzentration analythaltigem Probenmaterial bestückten Reaktionsgefäßen innerhalb einer Anordnung in räumlicher Nähe zueinander befindlicher Reaktionsgefäße während der Pipettierung von Proben oder Reagenzien mit einem automatischen Probenverteiler, **dadurch gekennzeichnet, daß** durch Verwendung eines Enzym/ Substrat-Farbstoff-Tests zunächst das Ausmaß der Kontamination mittels folgenden Modells A festgestellt wird:
a) Zugabe einer Enzymlösung zu Reaktionsgefäßen eines Teilbereichs besagter räumlicher Anordnung, während die übrigen Reaktionsgefäße mit einem saugfähigen schichtförmigen Material abgedeckt sind, welches ein Chromogen/Substrat-Reagenz enthält, wobei durch dessen Kontakt mit dem Enzym eine Farbreaktion ausgelöst wird,
b) Bestimmung von Anzahl, Intensität und/oder Verteilung der durch eine Farbentwicklung **gekennzeichnet**en abgedeckten Reaktionsgefäße,
und anschließend die Flüssigkeitsaufnahme (Aspirate Profile) und Flüssigkeitsabgabe (Dispense Profile) so modifiziert wird, daß Anzahl oder Intensität der durch Farbentwicklung **gekennzeichnet**en Reaktionsgefäße verringert wird.

2. Verfahren zur Reduzierung der Kontamination von leeren oder bereits mit analytfreiem oder in geringer Konzentration analythaltigem Probenmaterial bestückten Reaktionsgefäßen innerhalb einer Anordnung in räumlicher Nähe zueinander befindlicher Reaktionsgefäße während der Pipettierung von Proben oder Reagenzien mit einem automatischen Probenverteiler, **dadurch gekennzeichnet, daß** durch Verwendung eines Enzym/ Farbstoff-Tests zunächst das Ausmaß der Kontamination mittels folgenden Modells B festgestellt wird:
a) Zugabe einer Enzymlösung zu Reaktionsgefäßen eines Teilbereichs besagter räumlicher Anordnung,
b) Zugabe eines Chromogen/Substrat-Reagenzes, welches bei Kontakt mit dem Enzym eine Farbreaktion auslöst, zu den Reaktionsgefäßen des übrigen Teilbereichs besagter räumlicher Anordnung,
c) Ermittlung möglicher Kontaminationen durch Bestimmung der durch Farbentwicklung in den Reaktionsgefäßen;
und anschließend die Flüssigkeitsaufnahme (Aspirate Profile) und Flüssigkeitsabgabe (Dispense Profile) so modifiziert wird, daß Anzahl oder Intensität der durch Farbentwicklung **gekennzeichnet**en Reaktionsgefäße verringert wird.

3. Verfahren gemäß Anspruch 1, worin die Reaktionsgefäße Kavitäten einer Mikrotitrationsplatte sind.

4. Verfahren gemäß Anspruch 2, worin die Reaktionsgefäße Kavitäten einer Mikrotitrationsplatte sind.

5. Verfahren gemäß Anspruch 4, worin:
a) der automatische Probenverteiler Teil eines Vollautomaten zur automatisierten Durchführung eines Verfahrens zur Bestimmung eines Analyten ist; und
b) die Anordnung von in räumlicher Nähe zueinander befindlichen Reaktionsgefäßen aus einer linearen, in einer horizontalen Ebene liegenden Anordnung von 4 Mikrotitrationsplatten in der Sequenz: Position A, Position B, Position C und Position D besteht; und
c) eine Flüssigabfall-Station (FAS) in unmittelbarer Nähe zur Position A in ungefährer Verlängerung der gedachten Linie von Position D bis Position A positioniert ist; und
d) die Zugabe der Enzymlösung in einem Teilbereich der Mikrotitrationsplatte in den Positionen A bis D; und
e) die Ermittlung möglicher Kontaminationen insbesondere die von der Flüssigabfall-Station (FAS) ausgehenden Kontaminationen einschließt.

6. Verfahren gemäß Anspruch 5, worin die Flüssigabfall-Station (FAS) von einer oberen Abdeckelung abgedeckt wird und eine darin befindliche Öffnung möglichst klein dimensioniert ist, so daß einerseits optimaler Schutz vor Spritzern aus der Flüssigabfall-Station (FAS) bewirkt wird, jedoch andererseits die Abgabe von überschüssigem Probenvolumen durch diese Öffnung in die Flüssigabfall-Station (FAS) hinein reproduzierbar so möglich ist, daß dabei keine Flüssigkeit versehentlich mit dem Rand der Öffnung in Berührung kommt.

7. Verfahren gemäß Anspruch 6, worin die Flüssigabfall-Station (FAS) von vornherein so geformt ist, daß die obere Gefäßwandung der Abdeckelung entspricht, so daß eine separate Abdeckelung unter Beibehaltung ihrer Funktionalität entfallen kann.

8. Verfahren gemäß Anspruch 6, worin die Flüssigabfall-Station (FAS) durch Anbringung einer mechanischen Schutzvorrichtung zwischen der Flüssigabfall-Station und der Positionen der beschichteten Mikrotiterplatten getrennt wird, womit Kontaminationen verhindert werden.

## Claims

1. A method for reducing the contamination of empty reaction vessels, or of reaction vessels which are already charged with analyte-free sample material or sample material which contains a low concentration of analytic, within an arrangement of reaction vessels which are located in spatial proximity to each other while samples or reagents are pipetted using an automated sample dispenser, which comprises using an enzyme/substrate dye test to initially establish the extent of the contamination by means of model A below:
a) adding an enzyme solution to reaction vessels in a constituent region of said spatial arrangement while the remaining reaction vessels are covered with an absorbent stratiform material which contains a suitable chromogen/substrate reagent, with a color reaction being induced by its contact with the enzyme,
b) determining the number, intensity and/or distribution of the covered reaction vessels which are marked by a color development,
and subsequently modifying the liquid uptake (aspirate profile) and liquid release (dispense profile) such that the number or intensity of the reaction vessels marked by the color development is reduced.

2. A method for reducing the contamination of empty reaction vessels, or of reaction vessels which are already charged with analyte-free sample material or sample material which contains a low concentration of analytic, within an arrangement of reaction vessels which are located in spatial proximity to each other while samples or reagents are pipetted using an automated sample dispenser, which comprises using an enzyme/dye test to initially establish the extent of the contamination by means of model B below:
a) adding an enzyme solution to reaction vessels in a constituent region of said spatial arrangement,
b) adding a suitable chromogen/substrate reagent, which, on contact with the enzyme, induces a color reaction, to the reaction vessels of the remaining constituent region of said spatial arrangement,
c) ascertaining possible contaminations by determining the color development in the reaction vessels;
and subsequently modifying the liquid uptake (aspirate profile) and liquid release (dispense profile) such that the number or intensity of the reaction vessels marked by the color development is reduced.

3. The method as claimed in claim 1, wherein the reaction vessels are wells in a microtitration plate.

4. The method as claimed in claim 2, wherein the reaction vessels are wells in a microtitration plate.

5. The method as claimed in claim 4, wherein:
a) the automatic sample dispenser is part of a fully automated machine for the automated performance of a method for determining an analyte; and
b) the arrangement of reaction vessels which are located in spatial proximity to each other consists of a linear arrangement, which lies in a horizontal plane, of 4 microtitration plates in the sequence: position A, position B, position C and position D; and
c) a liquid waste station (LWS) is located in immediate proximity to position A in approximate extension of the imaginary line from position D to position A; and
d) the enzyme solution is added to a constituent region of the microtitration plate in positions A to D; and
e) the determination of possible contaminations includes, in particular, the contaminations emanating from the liquid waste station (LWS).

6. The method as claimed in claim 5, wherein the liquid waste station (LWS) is covered by an upper covering and an aperture which is located in it is as small as possible such that, on the one hand, optimal protection against splashes from the liquid waste station (LWS) is provided but, on the other hand, it is possible to reproducibly release excess sample volume through this aperture into the liquid waste station (LWS) such that no liquid inadvertently comes into contact with the edge of the aperture in this connection.

7. The method as claimed in claim 6, wherein the liquid waste station (LWS) is fashioned from the outset such that the upper vessel wall corresponds to the covering such that a separate covering can be dispensed with while retaining the function which it provides.

8. The method as claimed in claim 6, wherein the liquid waste station (LWS) is separated off by installing a mechanical protective device between the liquid waste station and the positions of the coated microtiter plates, thereby preventing contaminations.

## Revendications

1. Procédé de réduction de contaminations de récipients réacteurs vides, ou pré-remplis d'échantillons de matière sans analyte, ou contenant de l'analyte en faible concentration, à l'intérieur d'un agencement de réacteurs situés à proximité spatiale les uns des autres, pendant le pipettage d'échantillons ou de réactifs au moyen d'un distributeur automatique d'échantillons,
**caractérisé en ce que**
l'on détermine d'abord l'ampleur de la contamination en mettant en oeuvre un essai aux enzyme/ colorant-substrat, selon le modèle A suivant :
a) ajout d'une solution aux enzymes aux récipients réacteurs d'une partie de dudit agencement spatial, alors que les récipients réacteurs restants sont recouverts d'une matière absorbante stratiforme, matière qui contient un réactif substrat/chromogène, dont le contact avec l'enzyme provoque une réaction de coloration,
b) détermination du nombre, de l'intensité et/ou de la répartition des récipients réacteurs couverts, marqués par une coloration,
et qu'ensuite, la prise de liquide (*aspirate profile*) et la distribution de liquide (*dispense profile*) sont modifiées de façon telle que le nombre ou l'intensité des récipients réacteurs marqués par une coloration soient réduits.

2. Procédé de réduction de contaminations de récipients réacteurs vides, ou pré-remplis d'échantillons de matière sans analyte, ou contenant de l'analyte en faible concentration, à l'intérieur d'un agencement de réacteurs situés à proximité spatiale les uns des autres, pendant le pipettage d'échantillons ou de réactifs au moyen d'un distributeur automatique d'échantillons,
**caractérisé en ce qu'**en mettant en oeuvre un essai aux enzyme/ colorant, on détermine d'abord l'ampleur de la contamination à l'aide d'un modèle B suivant :
a) ajout d'une solution aux enzymes aux récipients réacteurs d'une partie dudit agencement spatial,
b) ajout d'un réactif substrat/chromogène, dont le contact avec l'enzyme provoque une réaction de coloration, aux récipients réacteurs de la partie restante dudit agencement spatial,
c) détermination des contaminations éventuelles grâce à la détermination de la coloration obtenue dans les récipients réacteurs;
et qu'ensuite la prise de liquide (*aspirate profile*) et la distribution de liquide (*dispense profile*) sont modifiées de façon telle que le nombre ou l'intensité des récipients réacteurs marqués par une coloration soient réduits.

3. Procédé selon la revendication 1 dans lequel les récipients réacteurs sont des cavités d'une plaquette de microtitrage.

4. Procédé selon la revendication 2, dans lequel les récipients réacteurs sont des cavités d'une plaquette de microtitrage.

5. Procédé selon la revendication 4, dans lequel
a) le distributeur automatique d'échantillons est une partie d'un dispositif entièrement automatique conçu pour l'exécution automatisée d'un procédé de détermination d'un analyte; et
b) l'agencement de récipients réacteurs situés à proximité spatiale les uns des autres est constitué d'un agencement linéaire, situé dans un plan horizontal, de 4 plaquettes de microtitrage, selon la séquence : position A, position B, position C et position D; et
c) un poste de déchets liquides (FAS) est positionné à proximité immédiate de la position A, approximativement dans un prolongement de la ligne imaginaire reliant les position D à position A; et
d) l'ajout de la solution d'enzyme s'effectue sur une partie de la plaquette de microtitrage des positions A à D; et
e) la détermination de contaminations éventuelles inclut notamment les contaminations pouvant provenir du poste de déchets liquides (FAS).

6. Procédé selon la revendication 5, dans lequel le poste de déchets liquides (FAS) est recouvert par un couvercle supérieur, et une ouverture aménagée dans celui-ci est la plus petite possible, de sorte que, d'une part, une protection optimale contre les éclaboussures depuis le poste de déchets liquides (FAS) soit réalisée, et que, d'autre part, en revanche, l'évacuation du volume d'échantillon excédentaire à travers cette ouverture, dans le poste de déchets liquides (FAS), soit possible de manière reproductible de telle sorte, qu'aucun liquide n'arrive involontairement en contact avec le bord de l'ouverture.

7. Procédé selon la revendication 6, dans lequel le poste de déchets liquides (FAS) est façonné d'entrée de telle manière que la paroi supérieure du récipient corresponde au couvercle, de sorte qu'une couverture séparée au moyen d'un couvercle ne soit pas nécessaire.

8. Procédé selon la revendication 6, dans lequel le poste de déchets liquides (FAS) est séparé des plaquettes de microtitrage recouvertes, au moyen d'un dispositif de protection mécanique entre le poste de déchets liquides et les positions de ces plaquettes, de façon à empêcher des contaminations.
